(19) **Europäisches Patentamt European Patent Office Office européen des brevets**

(11) **EP 4 492 842 A1**

(12) **EUROPEAN PATENT APPLICATION**
published in accordance with Art. 153(4) EPC

(43) Date of publication:
**15.01.2025 Bulletin 2025/03**

(21) Application number: **23777866.7**

(22) Date of filing: **16.03.2023**

(51) International Patent Classification (IPC):
**H04W 12/122** (2021.01)

(52) Cooperative Patent Classification (CPC):
**H04W 12/122**

(86) International application number:
**PCT/CN2023/081884**

(87) International publication number:
**WO 2023/185491 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 CN 202210326062**

(71) Applicant: **Huawei Technologies Co., Ltd.
Shenzhen, Guangdong 518129 (CN)**

(72) Inventors:
- **SUN, Li
  Shenzhen, Guangdong 518129 (CN)**
- **LIU, Peng
  Shenzhen, Guangdong 518129 (CN)**
- **WANG, Yuwei
  Shenzhen, Guangdong 518129 (CN)**

(74) Representative: **Maiwald GmbH
Engineering
Elisenhof
Elisenstrasse 3
80335 München (DE)**

(54) **RANDOM ACCESS METHOD AND APPARATUS**

(57) A random access method and an apparatus are provided. The method includes: A terminal device sends a first uplink message to a network device, where the first uplink message includes a first identifier. Correspondingly, the network device receives the first uplink message. Then, the network device processes the first identifier to obtain a plurality of modulation symbols, and then sends a first downlink message, where the first downlink message includes the plurality of modulation symbols. Correspondingly, after receiving the first downlink message, the terminal device may process the plurality of modulation symbols based on the first identifier to obtain a processed identifier. In this case, the terminal device may determine, based on the processed identifier, whether random access of the terminal device succeeds. According to the method, a phenomenon of covert communication between malicious users can be effectively reduced, thereby reducing air interface resource overheads, and ensuring an access success rate of an authorized user.

FIG. 4

**Description**

This application claims priority to Chinese Patent Application No. 202210326062.6, filed with the China National Intellectual Property Administration on March 30, 2022 and entitled "RANDOM ACCESS METHOD AND APPARATUS", which is incorporated herein by reference in its entirety.

**TECHNICAL FIELD**

This application relates to the field of communication technologies, and in particular, to a random access method and an apparatus.

**BACKGROUND**

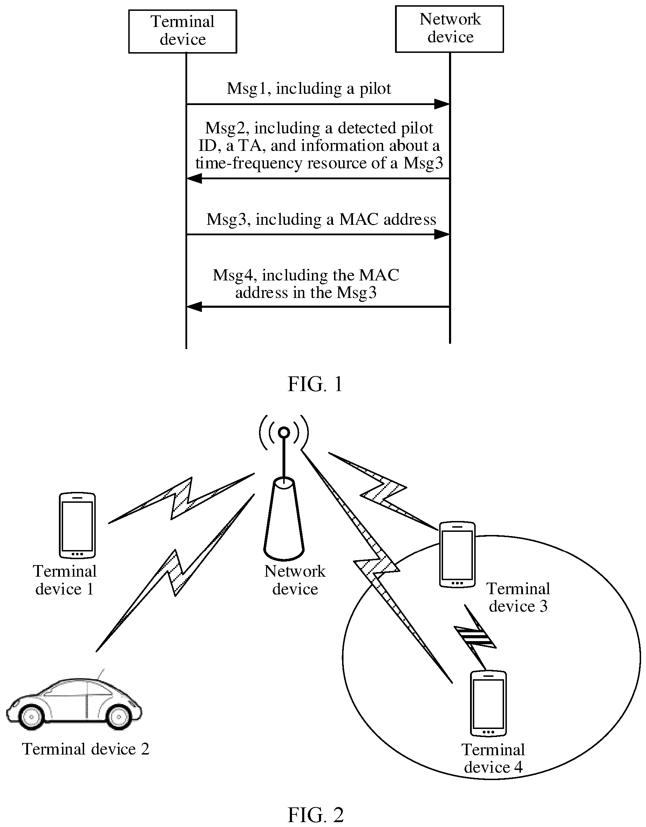

In a wireless communication system, a terminal device may perform random access by using a random access procedure. For example, as shown in FIG. 1, the random access procedure may include four-step random access, and the four-step random access includes: Step 1: The terminal device sends a message 1 (message1, Msg1) to a network device on a preset time-frequency resource, where the Msg1 includes a segment of pilots randomly selected from a finite set. Step 2: The network device calculates a timing advance (time advancement, TA) based on the pilot, and sends a message 2 (message2, Msg2) to the terminal device, where the Msg2 includes a pilot identification (identification, ID), the TA, a time-frequency resource of a message 3 (message3, Msg3), and other information. Step 3: The terminal device generates a 48-bit (bit) temporary random access control (multiple access control, MAC) address, and sends the 48-bit temporary random access control address to the network device as the Msg3. Step 4: The network device notifies, by broadcasting a message 4 (message4, Msg4), a successfully accessed UE, where the Msg4 includes a Msg3 sent by the successfully accessed UE.

However, the random access procedure has a security risk. For example, a malicious transmitter may send, to the network device by using a Msg3, any information that the malicious transmitter wants to transmit to a malicious receiver. If no collision occurs at the network device, or the malicious transmitter wins in contention when a collision occurs, when the network device broadcasts a Msg4, the malicious receiver receives the Msg3 sent by the malicious transmitter. As a result, covert communication between the malicious transmitter and the malicious receiver is implemented.

The covert communication consumes an air interface resource, and causes a decrease in an access success rate of an authorized user.

**SUMMARY**

This application provides a random access method and an apparatus, to effectively reduce a phenomenon of covert communication between malicious users, effectively reduce air interface resource overheads, and ensure an access success rate of an authorized user.

According to a first aspect, an embodiment of this application provides a random access method. The method is applied to a terminal device or a chip, and the chip may be disposed in the terminal device. The method includes: sending a first uplink message to a network device, where the first uplink message includes a first identifier; receiving a first downlink message from the network device, where the first downlink message includes a plurality of modulation symbols; and processing the plurality of modulation symbols based on the first identifier to obtain a processed identifier.

In this embodiment of this application, the network device does not directly modulate the first identifier to obtain the plurality of modulation symbols. In other words, the plurality of modulation symbols are different from modulation symbols obtained by directly modulating the first identifier. Correspondingly, after obtaining the plurality of modulation symbols, if the terminal device directly demodulates the plurality of modulation symbols, the terminal device cannot obtain content transmitted in the first downlink message, but needs to process the plurality of modulation symbols with reference to the first identifier, to obtain the content transmitted in the first downlink message. Therefore, even if a malicious receiver obtains the first downlink message, the malicious receiver cannot successfully decode the first downlink message because the malicious receiver cannot learn of the first identifier and a processing mode. In this way, a phenomenon of covert communication between malicious users is effectively avoided, thereby effectively ensuring an access success rate of an authorized user.

In a possible implementation, the processing the plurality of modulation symbols based on the first identifier includes: determining a mapping rule between an information bit and a constellation point based on the first identifier, and demodulating the plurality of modulation symbols according to the mapping rule.

In other words, the mapping rule between the information bit and the constellation point is not constant, but needs to be changed based on the first identifier. Even for a same information bit, when mapping rules are different, results obtained through modulation of the same information bit are different. According to the foregoing demodulation scheme, a case in which the malicious receiver obtains, by directly demodulating a modulation symbol, message content broadcast by the network device can be effectively alleviated, thereby avoiding covert communication between malicious users and ensuring an access success rate of an authorized user.

In a possible implementation, the determining a mapping rule between an information bit and a constellation point based on the first identifier includes: determining a control bit based on the first identifier, and determining the mapping rule based on correspondences between different control bits and different mapping rules.

In this embodiment of this application, determining the control bit based on the first identifier may also be understood as generating the control bit based on the first identifier to determine the mapping rule by using the control bit. The control bit is generated based on the first identifier Therefore, according to the method provided in this embodiment of this application, complexity and security can be comprehensively considered, so that security of the first downlink message can be ensured, and complexity of modulation performed by a transmitter and demodulation performed by a receiver can also be reduced.

In a possible implementation, the determining a control bit based on the first identifier includes: determining the control bit based on the first identifier and a random number generation algorithm, or determining the control bit based on the first identifier and a hash function.

In a possible implementation, the determining the control bit based on the first identifier and a hash function includes: determining the control bit based on a result of performing an exclusive OR operation on a first partial identifier and a second partial identifier and the hash function, where the first partial identifier and the second partial identifier are respectively parts of the first identifier.

In this embodiment of this application, the first identifier entirely participates in an operation of the control bit, so that the security of the first downlink message can be further improved.

In a possible implementation, a modulation scheme of the plurality of modulation symbols includes binary phase shift keying (binary phase shift keying, BPSK), where when the control bit is 0, the constellation point is (-1, 0) when the information bit is 0, or the constellation point is (1, 0) when the information bit is 1; or when the control bit is 1, the constellation point is (1, 0) when the information bit is 0, or the constellation point is (-1, 0) when the information bit is 1. Alternatively, a modulation scheme of the plurality of modulation symbols includes quadrature phase shift keying (quadrature phase shift keying, QPSK), where when the control bit is 00, the constellation point is $(\sqrt{2},\ 0)$ when the information bit is 00, the constellation point is $(0,\ \sqrt{2})$ when the information bit is 01, the constellation point is $(0,\ -\sqrt{2})$ when the information bit is 10, or the constellation point is $(-\sqrt{2},\ 0)$ when the information bit is 11; when the control bit is 01, the constellation point is $(-\sqrt{2}, 0)$ when the information bit is 00, the constellation point is $(0,\ -\sqrt{2})$ when the information bit is 01, the constellation point is $(0,\ \sqrt{2})$ when the information bit is 10, or the constellation point is $(\sqrt{2}, 0)$ when the information bit is 11; when the control bit is 10, the constellation point is (1, 1) when the information bit is 00, the constellation point is (-1, 1) when the information bit is 01, the constellation point is (1, -1) when the information bit is 10, or the constellation point is (-1, -1) when the information bit is 11; or when the control bit is 11, the constellation point is (-1, -1) when the information bit is 00, the constellation point is (1, -1) when the information bit is 01, the constellation point is (-1, 1) when the information bit is 10, or the constellation point is (1, 1) when the information bit is 11. Alternatively, a modulation scheme of the plurality of modulation symbols includes quadrature phase shift keying QPSK, where when the control bit is 00, the constellation point is (1, 1) when the information bit is 00, the constellation point is (-1, 1) when the information bit is 01, the constellation point is (1, -1) when the information bit is 10, or the constellation point is (-1, -1) when the information bit is 11; when the control bit is 01, the constellation point is (-1, 1) when the information bit is 00, the constellation point is (-1, -1) when the information bit is 01, the constellation point is (1, 1) when the information bit is 10, or the constellation point is (1, -1) when the information bit is 11; when the control bit is 10, the constellation point is (-1, -1) when the information bit is 00, the constellation point is (1, -1) when the information bit is 01, the constellation point is (-1, 1) when the information bit is 10, or the constellation point is (1, 1) when the information bit is 11; or when the control bit is 11, the constellation point is (1, -1) when the information bit is 00, the constellation point is (1, 1) when the information bit is 01, the constellation point is (-1, -1) when the information bit is 10, or the constellation point is (-1, 1) when the information bit is 11.

In this embodiment of this application, when control bits are different, even for a same type of information bit, constellation points corresponding to the information bit are completely different. Therefore, even if the malicious receiver randomly and blindly guesses the control bit and blindly demodulates the first downlink message, the plurality of modulation symbols cannot be correctly demodulated. In other words, the correspondence between the control bit and the mapping rule shown in this embodiment of this application can effectively confuse the malicious receiver, so that the malicious receiver cannot correctly perform demodulation even in a case of random guessing.

In a possible implementation, a bit length of the first identifier is equal to a bit length of the control bit.

In this embodiment of this application, when the length of the control bit is equal to the length of the first identifier, a process of controlling the mapping rule by using the control bit can be effectively simplified while ensuring the security of the first downlink message.

In a possible implementation, the processing the plurality of modulation symbols based on the first identifier includes: demodulating the plurality of modulation symbols to obtain a demodulated identifier; and encrypting known information based on an encryption algorithm and the first identifier to obtain a second identifier, where the known information is defined in a protocol or determined by the network device.

In this embodiment of this application, the network device does not directly modulate the first identifier, but modulates the second identifier after obtaining the second identifier based on the first identifier. According to the processing method shown in this embodiment of this application, a case in which the malicious receiver directly obtains the first uplink message from the first downlink message after receiving the first downlink message can be effectively avoided, thereby avoiding a phenomenon of covert communication between malicious users. In addition, the covert communication between the malicious users is avoided, and a case in which signaling delivered by the network device is invalid for the authorized user is avoided. Therefore, signaling overheads are effectively reduced.

In a possible implementation, the method further includes: when the second identifier is the same as the demodulated identifier, determining that random access of the terminal device succeeds.

According to a second aspect, an embodiment of this application provides a random access method. The method is applied to a network device or a chip, and the chip may be disposed in the network device. The method includes: receiving a first uplink message from a terminal device, where the first uplink message includes a first identifier; determining a mapping rule between an information bit and a constellation point based on the first identifier, and modulating the first identifier according to the mapping rule to obtain a plurality of modulation symbols; and sending a first downlink message to the terminal device, where the first downlink message includes the plurality of modulation symbols.

In this embodiment of this application, when modulating the first identifier, the network device does not directly modulate the first identifier, but determines the mapping rule between the information bit and the constellation point based on the first identifier, and modulates the first identifier according to the mapping rule. Therefore, even for a same information bit, when mapping rules are different, results obtained through modulation of the same information bit may be different. According to the foregoing modulation scheme, a case in which a malicious receiver obtains, by directly demodulating a modulation symbol, message content broadcast by the network device can be effectively alleviated, thereby avoiding covert communication between malicious users and ensuring an access success rate of an authorized user.

In a possible implementation, the determining a mapping rule between an information bit and a constellation point based on the first identifier includes: determining a control bit based on the first identifier, and determining the mapping rule based on correspondences between different control bits and different mapping rules.

In a possible implementation, the determining a control bit based on the first identifier includes: determining the control bit based on the first identifier and a random number generation algorithm, or determining the control bit based on the first identifier and a hash function.

In a possible implementation, the determining the control bit based on the first identifier and a hash function includes: determining the control bit based on a result of performing an exclusive OR operation on a first partial identifier and a second partial identifier and the hash function, where the first partial identifier and the second partial identifier are respectively parts of the first identifier.

In a possible implementation, a modulation scheme of the plurality of modulation symbols includes binary phase shift keying BPSK, where when the control bit is 0, the constellation point is (-1, 0) when the information bit is 0, or the constellation point is (1, 0) when the information bit is 1; or when the control bit is 1, the constellation point is (1, 0) when the information bit is 0, or the constellation point is (-1, 0) when the information bit is 1. Alternatively, a modulation scheme of the plurality of modulation symbols includes quadrature phase shift keying QPSK, where when the control bit is 00, the constellation point is $(\sqrt{2}, 0)$ when the information bit is 00, the constellation point is $(0, \sqrt{2})$ when the information bit is 01, the constellation point is $(0, -\sqrt{2})$ when the information bit is 10, or the constellation point is $(-\sqrt{2}, 0)$ when the information bit is 11; when the control bit is 01, the constellation point is $(-\sqrt{2}, 0)$ when the information bit is 00, the constellation point is $(0, -\sqrt{2})$ when the information bit is 01, the constellation point is $(0, \sqrt{2})$ when the information bit is 10, or the constellation point is $(\sqrt{2}, 0)$ when the information bit is 11; when the control bit is 10, the constellation point is (1, 1) when the information bit is 00, the constellation point is (-1, 1) when the information bit is 01, the constellation point is (1, -1) when the information bit is 10, or the constellation point is (-1, -1) when the information bit is 11; or when the control bit is 11, the constellation point is (-1, -1) when the information bit is 00, the constellation point is (1, -1) when the information bit is 01, the constellation point is (-1, 1) when the information bit is 10, or the constellation point is (1, 1) when the information bit is 11. Alternatively, a modulation scheme of the plurality of modulation symbols includes quadrature phase shift keying

QPSK, where when the control bit is 00, the constellation point is (1, 1) when the information bit is 00, the constellation point is (-1, 1) when the information bit is 01, the constellation point is (1, -1) when the information bit is 10, or the constellation point is (-1, -1) when the information bit is 11; when the control bit is 01, the constellation point is (-1, 1) when the information bit is 00, the constellation point is (-1, -1) when the information bit is 01, the constellation point is (1, 1) when the information bit is 10, or the constellation point is (1, -1) when the information bit is 11; when the control bit is 10, the constellation point is (-1, -1) when the information bit is 00, the constellation point is (1, -1) when the information bit is 01, the constellation point is (-1, 1) when the information bit is 10, or the constellation point is (1, 1) when the information bit is 11; or when the control bit is 11, the constellation point is (1, -1) when the information bit is 00, the constellation point is (1, 1) when the information bit is 01, the constellation point is (-1, -1) when the information bit is 10, or the constellation point is (-1, 1) when the information bit is 11.

In a possible implementation, a bit length of the first identifier is equal to a bit length of the control bit.

According to a third aspect, an embodiment of this application provides a random access method. The method is applied to a network device or a chip, the chip may be disposed in the network device. The method includes: receiving a first uplink message from a terminal device, where the first uplink message includes a first identifier; encrypting known information based on an encryption algorithm and the first identifier to obtain a second identifier, and modulating the second identifier to obtain a plurality of modulation symbols, where the known information is defined in a protocol or determined by the network device; and sending a first downlink message to the terminal device, where the first downlink message includes the plurality of modulation symbols.

In this embodiment of this application, when modulating the first identifier, the network device does not directly modulate the first identifier, but encrypts the known information (which may also be referred to as a common sequence or the like) based on the encryption algorithm and the first identifier to obtain the second identifier, and modulates the second identifier. Therefore, without changing a signal processing process at a physical layer, a case in which a malicious receiver obtains, by directly demodulating a modulation symbol, message content broadcast by the network device is effectively alleviated, thereby avoiding covert communication between malicious users and ensuring an access success rate of an authorized user.

In a possible implementation, a length of the second identifier is equal to a length of the first identifier.

According to a fourth aspect, an embodiment of this application provides a communication apparatus, configured to perform the method in the first aspect or any one of the possible implementations of the first aspect. The communication apparatus includes a unit that performs the first aspect or any one of the possible implementations of the first aspect.

According to a fifth aspect, an embodiment of this application provides a communication apparatus, configured to perform the method in the second aspect or any one of the possible implementations of the second aspect. The communication apparatus includes a unit that performs the second aspect, the third aspect, or any possible implementation.

According to a sixth aspect, an embodiment of this application provides a communication apparatus. The communication apparatus includes a processor, configured to perform the method in the first aspect or any one of the possible implementations of the first aspect. Alternatively, the processor is configured to execute a program stored in a memory. When the program is executed, the method in the first aspect or any one of the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a seventh aspect, an embodiment of this application provides a communication apparatus. The communication apparatus includes a processor, configured to perform the method in the second aspect, the third aspect, or any possible implementation. Alternatively, the processor is configured to execute a program stored in a memory. When the program is executed, the method in the second aspect or any one of the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to an eighth aspect, an embodiment of this application provides a communication apparatus. The communication apparatus includes a logic circuit and an interface. The logic circuit is coupled to the interface. The interface is configured to output a first uplink message, where the first uplink message includes a first identifier, and input a first downlink message, where the first downlink message includes a plurality of modulation symbols. The logic circuit is configured to process the plurality of modulation symbols based on the first identifier to obtain a processed identifier.

According to a ninth aspect, an embodiment of this application provides a communication apparatus. The communication apparatus includes a logic circuit and an interface. The logic circuit is coupled to the interface. The interface is configured to input a first uplink message. The logic circuit is configured to determine a mapping rule between an information bit and a constellation point based on a first identifier, and modulate the first identifier according to the mapping rule to obtain a plurality of modulation symbols. The interface is further configured to output a first downlink message, where the first downlink message includes the plurality of modulation symbols.

In another possible implementation, the interface is configured to input a first uplink message. The logic circuit is configured to encrypt known information based on an encryption algorithm and a first identifier to obtain a second identifier, and modulate the second identifier to obtain a plurality of modulation symbols. The interface is further configured to output a first downlink message, where the first downlink message includes the plurality of modulation symbols.

According to a tenth aspect, an embodiment of this application provides a computer-readable storage medium. The computer-readable storage medium is configured to store a computer program. When the computer program is run on a computer, the method in the first aspect or any one of the possible implementations of the first aspect is performed.

According to an eleventh aspect, an embodiment of this application provides a computer-readable storage medium. The computer-readable storage medium is configured to store a computer program. When the computer program is run on a computer, the method in the second aspect, the third aspect, or any possible implementation is performed.

According to a twelfth aspect, an embodiment of this application provides a computer program product. The computer program product includes a computer program or computer code. When the computer program product runs on a computer, the method in the first aspect or any one of the possible implementations of the first aspect is performed.

According to a thirteenth aspect, an embodiment of this application provides a computer program product. The computer program product includes a computer program or computer code. When the computer program product runs on a computer, the method in the second aspect, the third aspect, or any possible implementation is performed.

According to a fourteenth aspect, an embodiment of this application provides a computer program. When the computer program is run on a computer, the method in the first aspect or any one of the possible implementations of the first aspect is performed.

According to a fifteenth aspect, an embodiment of this application provides a computer program. When the computer program is run on a computer, the method in the second aspect, the third aspect, or any possible implementation is performed.

According to a sixteenth aspect, an embodiment of this application provides a wireless communication system. The wireless communication system includes a terminal device and a network device. The terminal device is configured to perform the method in the first aspect or any one of the possible implementations of the first aspect. The network device is configured to perform the method in the second aspect or any one of the possible implementations of the second aspect. Alternatively, the network device is configured to perform the method in the third aspect or any one of the possible implementations of the third aspect.

**BRIEF DESCRIPTION OF DRAWINGS**

FIG. 1 is a schematic flowchart of four-step random access;
FIG. 2 is a diagram of an architecture of a communication system according to an embodiment of this application;
FIG. 3 is a diagram in which a network device generates a Msg4 based on a Msg3;
FIG. 4 is a schematic flowchart of a random access method according to an embodiment of this application;
FIG. 5a shows a mapping rule according to an embodiment of this application;
FIG. 5b shows another mapping rule according to an embodiment of this application;
FIG. 5c shows still another mapping rule according to an embodiment of this application;
FIG. 5d shows still another mapping rule according to an embodiment of this application;
FIG. 5e shows still another mapping rule according to an embodiment of this application;
FIG. 5f is a diagram of a control bit determining method according to an embodiment of this application;
FIG. 5g is a diagram of another control bit determining method according to an embodiment of this application;
FIG. 6 is a schematic flowchart of a four-step random access method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of still another communication apparatus according to an embodiment of this application.

## DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" mentioned in the specification means that specific features, structures, or characteristics described in combination with the embodiment may be included in at least one embodiment of this application. The phrase shown in various locations in the specification does not necessarily mean a same embodiment, and is not an independent or optional embodiment exclusive from another embodiment. It may be understood explicitly and implicitly by a person skilled in the art that the embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: merely A exists, merely B exists, and both A and B exist. A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system emerging in future communication development, such as a 6th generation (6th generation, 6G) communication system.

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, an industrial internet, or another network. The IoT network may include, for example, an internet of vehicles. Communication modes in an internet of vehicles system are collectively referred to as vehicle-to-everything (vehicle-to-everything, V2X, where X may represent everything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. For example, in FIG. 2 shown below, terminal devices may communicate with each other by using a D2D technology, an M2M technology, a V2X technology, or the like.

FIG. 2 is a diagram of an architecture of a communication system according to an embodiment of this application. As shown in FIG. 2, the communication system may include at least one network device and at least one terminal device, for example, a terminal device 1 to a terminal device 4 in FIG. 2. For example, the terminal device 3 and the terminal device 4 shown in FIG. 2 may directly communicate with each other. For example, the terminal devices may directly communicate with each other by using the D2D technology. For another example, the terminal device 1 to the terminal device 4 may separately communicate with the network device. It may be understood that the terminal device 3 and the terminal device 4 may directly communicate with the network device, or may indirectly communicate with the network device, for example, communicate with the network device via another terminal device (not shown in FIG. 2). It should be understood that FIG. 2 shows an example of one network device, a plurality of terminal devices, and communication links between the communication devices. Optionally, the communication system may include a plurality of network devices, and a coverage area of each network device may include another quantity of terminal devices, for example, more or fewer terminal devices. This is not limited in this application.

The following describes the terminal device and the network device in detail.

The terminal device is an apparatus that has a wireless transceiver function. The terminal device may communicate with an access network device (may also be referred to as an access device) in a radio access network (radio access network, RAN). The terminal device may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor device, an outdoor device, a handheld device, or a vehicle-mounted device; or may be deployed on water (for example, a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5G network or a future network, or the like that has a wireless communication function. This is not limited in this application.

It may be understood that the terminal device shown in this application may include a vehicle (for example, a car) in the internet of vehicles, and also include a vehicle-mounted device, a vehicle-mounted terminal, or the like in the internet of vehicles. A specific form of the terminal device used in the internet of vehicles is not limited in this application. It may be understood that the terminal devices shown in this application may alternatively communicate with each other by using a technology such as D2D, V2X, or M2M. A communication method between the terminal devices is not limited in this application.

The network device may be an apparatus that is deployed in the radio access network and that provides a wireless communication service for the terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device that has a wireless transceiver function, and includes but is not limited to the base station shown above (including a base station deployed on a satellite). Alternatively, the network device may be an apparatus that has a base station function in 6G. Optionally, the network device may be an access node, a wireless relay node, a wireless backhaul node, or the like in a wireless local area network (wireless fidelity, Wi-Fi) system. Optionally, the network device may be a radio controller in a cloud radio access network (cloud radio access network, CRAN) scenario. Optionally, the network device may be a wearable device, a vehicle-mounted device, or the like. Optionally, the network device may be a small cell, a transmission reception point (transmission reception point, TRP) (may also be referred to as a transmission point), or the like. It may be understood that the network device may alternatively be a base station, a satellite, or the like in a future evolved public land mobile network (public land mobile network, PLMN). The network device may alternatively be an apparatus functioning as a base station in a non-terrestrial communication system, D2D, V2X, or M2M, or the like. A specific type of the network device is not limited in this application. In systems of different radio access technologies, an apparatus that has a function of the network device may be named differently.

Optionally, in some deployment of the network device, the network device may include a central unit (central unit, CU), a distributed unit (distributed unit, DU), and the like. In some other deployment of the network device, the CU may be further split into a CU-control plane (control plane, CP), a CU-user plane (user plane, UP), and the like. In some still other deployment of the network device, the network device may alternatively be an open radio access network (open radio access network, ORAN) architecture or the like. A specific deployment manner of the network device is not limited in this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of a new service scenario, the technical solutions provided in embodiments of this application are also applicable to similar technical problems.

In a wireless communication system, a terminal device in a radio resource control (radio resource control, RRC) idle state or an inactive (inactive) state may access a network through random access, set up various bearers with a network device, and obtain a related resource, a parameter configuration, and the like, to communicate with the network device. However, in a random access method shown in FIG. 1, a malicious user may perform covert communication according to the random access method. As a result, an air interface resource is consumed, and an access success rate of an authorized user is also affected.

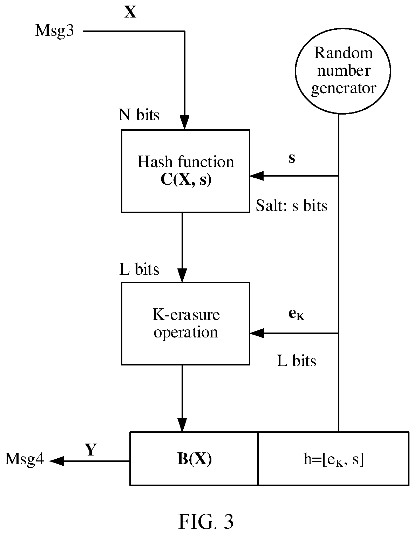

In another random access method, after receiving a Msg3, a network device may perform operations such as salting (salting), hash (hash), and K-erasure (K-erasure) on the Msg3, so that a malicious receiver cannot infer the Msg3 by using a Msg4, and a phenomenon of covert communication between malicious users is alleviated. As shown in FIG. 3, a MAC address in the Msg3 is represented by X, and X includes N bits. In this case, steps in which the network device generates the Msg4 based on the Msg3 received by the network device are as follows:

First, a salting operation is performed on an input (namely, X) by using a sequence s generated by a random number generator, and then the input is input to a hash function to obtain L bits. Then, a randomly generated sequence $e_K$ with a length of L and a Hamming weight of K is used as an erasure mask, and an erasure operation is performed on an output (namely, the L bits) of the hash function to obtain a sequence B(X). Next, B(X) is spliced with $e_K$ and s to obtain Y, and Y is sent to a terminal device by using the Msg4. Finally, after the terminal device receives the Msg4, an authorized user may perform the same operations by using the local Msg3 and $e_K$ and s in the Msg4 to obtain B(X)', and compare B(X)' with B(X) in the Msg4, to determine whether access of the terminal device succeeds.

Due to irreversibility of the hash function and the erasure operation, the malicious receiver cannot restore the Msg3 by using the Msg4, and therefore cannot perform covert communication. Although the random access method shown in FIG. 3 can effectively avoid the covert communication, the network device needs to broadcast the salting sequence s and the erasure sequence $e_K$ in the Msg4. This causes additional air interface resource overheads.

In view of this, embodiments of this application provide a random access method and an apparatus, to effectively avoid a phenomenon of covert communication between malicious users, and also effectively reduce air interface resource overheads, so as to ensure an access success rate of an authorized user.

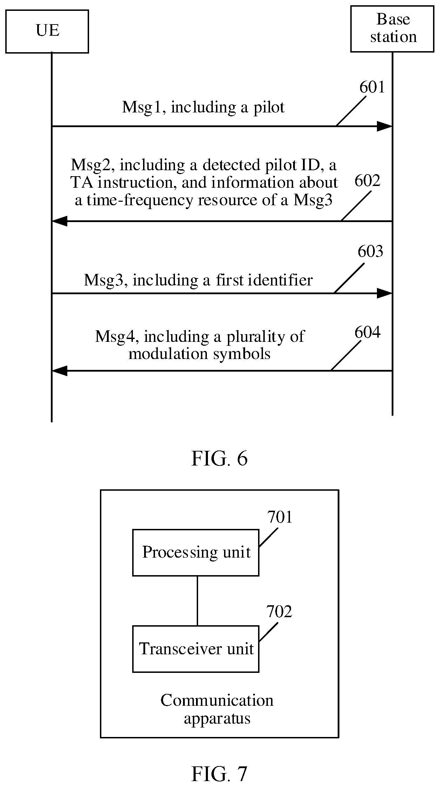

It may be understood that the method provided in embodiments of this application may be applied to the system shown in FIG. 1. For descriptions of the terminal device and the network device in the following method embodiments, refer to the system shown in FIG. 1, or refer to communication apparatuses shown in FIG. 7 to FIG. 9 below.

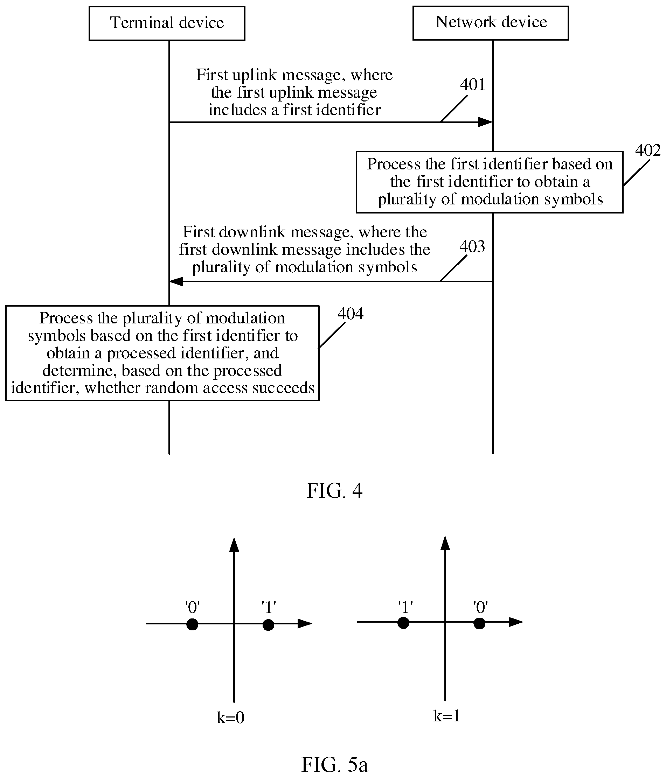

FIG. 4 is a schematic flowchart of a random access method according to an embodiment of this application. As shown in FIG. 4, the method includes the following steps.

401: A terminal device sends a first uplink message to a network device, where the first uplink message includes a first identifier. Correspondingly, the network device receives the first uplink message.

The first identifier may be for distinguishing between different terminal devices. For example, the first identifier may be an identifier related to the terminal device, or the first identifier may be a unique user identifier. For example, the first identifier may include a MAC address or an identity (for example, device fingerprint information) of the terminal device. For example, a bit length of the first identifier may be 48 bits. It may be understood that the bit length of the first identifier is not limited in this embodiment of this application. It may be understood that, because the first uplink message may include only the first identifier, the first identifier and the first uplink message shown below may be replaced with each other.

A specific type of the first uplink message may be determined according to a random access procedure. For example, when the random access procedure performed by the terminal device is four-step random access, the first uplink message may include a Msg3. For another example, when the random access procedure performed by the terminal device is two-step random access, the first uplink message may include a message A (messageA, MsgA). When initiating the two-step random access, the terminal device may send a pilot and data in Step 1 (for example, represented by the MsgA), and then the network device sends a random access response to the terminal device in Step 2 (for example, represented by a message B (message B, MsgB)). For example, when a service of data to be transmitted by the terminal device is an ultra-reliable and low-latency communication (ultra-reliable and low-latency communications, URLLC) service, the terminal device may initiate the two-step random access, so that an access latency and signaling overheads can be effectively reduced. It may be understood that a preamble part in the MsgA may be equivalent to a MsgI part in the four-step random access, and a data part in the MsgA may be equivalent to a Msg3 part in the four-step random access, in other words, the MsgA may include the first identifier.

402: The network device processes the first identifier based on the first identifier to obtain a plurality of modulation symbols.

The modulation symbol (modulation symbol) in this embodiment of this application may be obtained through modulation according to any one of the following modulation schemes: BPSK, QPSK, or 16QAM. For example, the modulation symbol may be understood as data carried on a resource element (resource element, RE). For example, for the BPSK, one modulation symbol may correspond to one information bit; for the QPSK, one modulation symbol may correspond to two information bits; and for the 16QAM, one modulation symbol may correspond to four information bits. For a method for obtaining the plurality of modulation symbols by the network device, refer to Implementation 1 to Implementation 3 shown below. Details are not described herein.

It may be understood that, because most signaling transmitted in a random access procedure is control signaling and high reliability is needed, each modulation scheme in embodiments of this application is shown by using a lower-order modulation scheme as an example. However, the modulation scheme shown in embodiments of this application should not be understood as a limitation on embodiments of this application. For example, with development of standard technologies, when the terminal device initiates a random access procedure, another factor (for example, a factor other than reliability) needs to be considered, and a higher-order modulation scheme needs to be used. In this case, the method shown in this embodiment of this application is still applicable.

Generally, in the random access method shown in FIG. 1, after obtaining the first identifier, the network device directly modulates the first identifier according to a specific modulation scheme to obtain a plurality of modulation symbols. In addition, in a process of modulating the first identifier, there is always only one constellation diagram used by the network device.

However, in this embodiment of this application, after obtaining the first identifier, the network device further needs to modulate the first identifier based on the first identifier. For example, that the network device processes the first identifier based on the first identifier may include: The network device determines a mapping rule between an information bit and a constellation point based on the first identifier, and then modulates the first identifier according to the mapping rule to obtain the plurality of modulation symbols. In other words, the mapping rule between the information bit and the constellation point is not constant, but needs to be changed based on the first identifier. Even for a same information bit, when mapping rules are different, results obtained through modulation of the same information bit are different. In other words, in the method shown in this embodiment of this application, in a modulation process, the network device needs to use a plurality of constellation diagrams for one modulation scheme. Alternatively, the mapping rule shown in this embodiment of this application may be understood as that the mapping rule is not a mapping rule between an information bit and a constellation point in one constellation diagram, but a mapping rule between an information bit and a constellation point in one of a plurality of constellation diagrams. A specific constellation diagram corresponding to each information bit may be determined based on the first identifier.

For example, that the network device processes the first identifier based on the first identifier may include: encrypting known information based on an encryption algorithm and the first identifier to obtain a second identifier, and then modulating the second identifier to obtain a plurality of modulation symbols. In other words, the network device does not directly modulate the first identifier, but modulates the second identifier after obtaining the second identifier based on the first identifier. According to the processing method shown in this embodiment of this application, a case in which a malicious receiver directly obtains the Msg3 from a Msg4 after receiving the Msg4 can be effectively avoided, thereby avoiding a phenomenon of covert communication between malicious users. In addition, the covert communication between the malicious users is avoided, and a case in which signaling delivered by the network device is invalid for an authorized user is avoided. Therefore, signaling overheads are effectively reduced. It may be understood that the method for obtaining the plurality of modulation symbols by the network device is merely an example. For specific descriptions of step 402, refer to Implementation 1 to Implementation 3 shown below. Details are not described one by one herein.

Generally, in the random access method shown in FIG. 3, after obtaining the first identifier, the network device further performs the salting operation, the erasure operation, and the like based on the first identifier, and then performs modulation. However, in the method shown in FIG. 3, when the network device sends the Msg4, modulation symbols are included, and the sequence s used in the salting operation and the sequence $e_K$ used in the erasure operation are also included. As a result, signaling overheads are increased.

However, in this embodiment of this application, when the network device sends the first downlink message, the first downlink message does not need to additionally include a sequence, a parameter, or the like related to a process in which the network device processes the first identifier.

In this way, according to the random access method shown in FIG. 4, the phenomenon of the covert communication between the malicious users is effectively avoided without increasing the signaling overheads, thereby ensuring an access success rate of the authorized user.

403: The network device sends the first downlink message to the terminal device, where the first downlink message includes the plurality of modulation symbols. Correspondingly, the terminal device receives the first downlink message.

A specific type of the first downlink message may be determined according to the random access procedure. For example, when the random access procedure performed by the terminal device is the four-step random access, the first downlink message may include the Msg4. For another example, when the random access procedure performed by the terminal device is the two-step random access, the first downlink message may include the MsgB. For descriptions of the first downlink message, refer to the descriptions of the first uplink message in step 401. Details are not described herein again.

404: The terminal device processes the plurality of modulation symbols based on the first identifier to obtain a processed identifier, and determines, based on the processed identifier, whether random access succeeds.

The network device may receive first uplink messages from a plurality of terminal devices, and decode the first uplink messages. Then, the network device may perform processing based on a first identifier in a successfully decoded first uplink message to obtain a plurality of modulation symbols. Therefore, after receiving the plurality of modulation symbols, a terminal device processes the plurality of modulation symbols to obtain a processed identifier, and then determines, based on the processed identifier, whether random access of the terminal device succeeds.

The terminal device may perform processing according to the method corresponding to the network device (in other words, corresponding to the processing method shown in step 402). For example, that the terminal device processes the plurality of modulation symbols based on the first identifier includes: The terminal device determines the mapping rule between the information bit and the constellation point based on the first identifier, and then demodulates the plurality of modulation symbols according to the mapping rule to obtain the processed identifier. If the processed identifier is the same as the first identifier, the terminal device may determine that the random access of the terminal device succeeds. If the processed identifier is different from the first identifier, the terminal device determines that the random access of the terminal device fails. Then, the terminal device may re-initiate random access. It may be understood that the terminal device needs to use a plurality of constellation diagrams in a demodulation process. To be specific, the terminal device needs to determine, according to the mapping rule, a constellation diagram corresponding to each modulation symbol during demodulation.

For example, that the terminal device processes the plurality of modulation symbols based on the first identifier includes: demodulating the plurality of modulation symbols to obtain a demodulated identifier. After obtaining the demodulated identifier, the terminal device may determine, according to the following two methods, whether the random access of the terminal device succeeds. In a first method, the terminal device encrypts the known information based on the encryption algorithm and the first identifier to obtain the second identifier. If the second identifier is the same as the demodulated identifier, it indicates that the random access of the terminal device succeeds. If the second identifier is different from the demodulated identifier, it indicates that the random access of the terminal device fails. In a second method, the terminal device decrypts the demodulated identifier based on the encryption algorithm and the first identifier to obtain a decrypted identifier. If the decrypted identifier is the same as the known information, it indicates that the random access of the terminal device succeeds. If the decrypted identifier is different from the known information, it indicates that the random access of the terminal device fails.

It may be understood that the foregoing method for processing the plurality of modulation symbols by the terminal device is merely an example. For specific descriptions of step 404, refer to Implementation 1 to Implementation 3 shown below. Details are not described one by one herein.

In this embodiment of this application, the network device does not directly modulate the first identifier, but processes the first identifier based on the first identifier to obtain the plurality of modulation symbols. In other words, the plurality of modulation symbols are different from modulation symbols obtained by directly modulating the first identifier. Correspondingly, after obtaining the plurality of modulation symbols, if the terminal device directly demodulates the plurality of modulation symbols, the terminal device cannot obtain content transmitted in the first downlink message, but needs to process the plurality of modulation symbols with reference to the first identifier, to obtain the content transmitted in the first downlink message. Therefore, even if the malicious receiver obtains the first downlink message, the malicious receiver cannot successfully decode the first downlink message because the malicious receiver cannot learn of the first identifier and a processing mode. In this way, the phenomenon of the covert communication between the malicious users is effectively avoided, thereby effectively ensuring the access success rate of the authorized user.

The following describes in detail a manner in which the network device obtains the plurality of modulation symbols, and a manner in which the terminal device demodulates the plurality of modulation symbols in the method shown in FIG. 4.

Implementation 1

The network device determines the mapping rule between the information bit and the constellation point based on the first identifier, and modulates the first identifier according to the mapping rule to obtain the plurality of modulation symbols. Correspondingly, after obtaining the plurality of modulation symbols, the terminal device determines the mapping rule between the information bit and the constellation point based on the first identifier, and demodulates the plurality of modulation symbols according to the mapping rule. In this embodiment of this application, even for a same modulation scheme, the mapping rule between the information bit and the constellation point is not determined by using one constellation diagram, but needs to be determined by using a plurality of constellation diagrams. For example, for a same information bit, when mapping rules determined based on the first identifier are different, symbols obtained through modulation of the same information bit are different.

In a possible implementation, the mapping rule$=f_1(f_2(i_m, i_{m+1}, \ldots, i_n), s)$, where $f_2(i_m, i_{m+1}, \ldots, i_n)$ represents a function related to $i_m^{th}$ to $i_n^{th}$ information bits in the first identifier, values of m and n are determined according to the modulation scheme, s represents the $i_m^{th}$ to the $i_n^{th}$ information bits in the first identifier, and $f_1$ represents a function related to $f_2(i_m, i_{m+1}, \ldots, i_n)$ and s. For example, if the modulation scheme is the BPSK, n=m+0, to be specific, $f_2(i_m, i_{m+1}, \ldots, i_n)$ represents a function related to the $i_m^{th}$ information bit in the first identifier. For another example, if the modulation scheme is the QPSK, n=m+1, to be specific, $f_2(i_m, i_{m+1}, \ldots, i_n)$ represents a function related to the $i_m^{th}$ information bit and the $i_{m+1}^{th}$ information bit in the first identifier. For another example, if the modulation scheme is the 16QAM, n=m+3, to be specific, $f_2(i_m, i_{m+1}, \ldots, i_n)$ represents a function related to the $i_m^{th}$ to the $i_{m+3}^{th}$ information bits in the first identifier.

In another possible implementation, the determining a mapping rule between an information bit and a constellation point based on the first identifier may include: determining a control bit based on the first identifier, and determining the mapping rule based on correspondences between different control bits and different mapping rules. In other words, when the control bit changes, the mapping rule also changes. Even for a same information bit, if control bits determined based on the first identifier are different, mapping rules between the information bit and the constellation point are different. Alternatively, it may be understood as that, if control bits determined based on the first identifier are different, constellation diagram formats are different. In other words, the mapping rule between the information bit and the constellation point varies with a constellation diagram format.

The following uses an example to describe a relationship between the control bit (represented by k) and the mapping rule. For a control bit determining method, refer to Manner 1 to Manner 3 shown below.

In an example, assuming that the network device performs modulation by using the BPSK, each modulation symbol may correspond to one information bit, and the mapping rule of the information bit (represented by s) in the first identifier may be shown in FIG. 5a or Table 1. If a control bit is 0, a constellation point is (-1, 0) when an information bit is 0, or a constellation point is (1, 0) when an information bit is 1. If a control bit is 1, a constellation point is (1, 0) when an information bit is 0, or a constellation point is (-1, 0) when an information bit is 1. Correspondingly, for a manner in which the terminal device performs demodulation by using the BPSK, refer to Table 1.

**Table 1**

| Value of k | Constellation point when s=0 | Constellation point when s=1 |
|---|---|---|
| 0 | (-1, 0) | (1, 0) |
| 1 | (1, 0) | (-1, 0) |

For example, control bits determined based on the first identifier are 0100... (content omitted by using the ellipsis is another control bit), and the first identifier is 1101... (content omitted by using the ellipsis is another information bit). For example, when one control bit sequentially controls one information bit, for example, when a $1^{st}$ control bit controls a $1^{st}$ information bit, because the $1^{st}$ control bit is 0 and the $1^{st}$ information bit is 1, a symbol obtained through modulation of the $1^{st}$ information bit is (1, 0); because a $2^{nd}$ control bit is 1 and a $2^{nd}$ information bit is 1, a symbol obtained through modulation of the $2^{nd}$ information bit is (-1, 0); because a $3^{rd}$ control bit is 0 and a $3^{rd}$ information bit is 0, a symbol obtained through modulation of the $3^{rd}$ information bit is (-1, 0); and because a $4^{th}$ control bit is 0 and a $4^{th}$ information bit is 1, a symbol obtained through modulation of the $4^{th}$ information bit is (1, 0). It can be learned from that even if both the $1^{st}$ information bit and the $2^{nd}$ information bit are 1, the symbols obtained through the modulation are different because the control bits are different.

Assuming that the network device performs modulation by using the BPSK, the mapping rule of the information bit in the first identifier may be shown in Table 2. As shown in Table 2, if a control bit is 0, a constellation point is (1, 0) when an information bit is 0, or a constellation point is (-1, 0) when an information bit is 1. If a control bit is 1, a constellation point is (-1, 0) when an information bit is 0, or a constellation point is (1, 0) when an information bit is 1. Correspondingly, for a manner in which the terminal device performs demodulation by using the BPSK, refer to Table 2. For descriptions of Table 2, refer to the descriptions of Table 1. Details are not described one by one herein again.

**Table 2**

| Value of k | Constellation point when s=0 | Constellation point when s=1 |
|---|---|---|
| 0 | (1, 0) | (-1, 0) |
| 1 | (-1, 0) | (1, 0) |

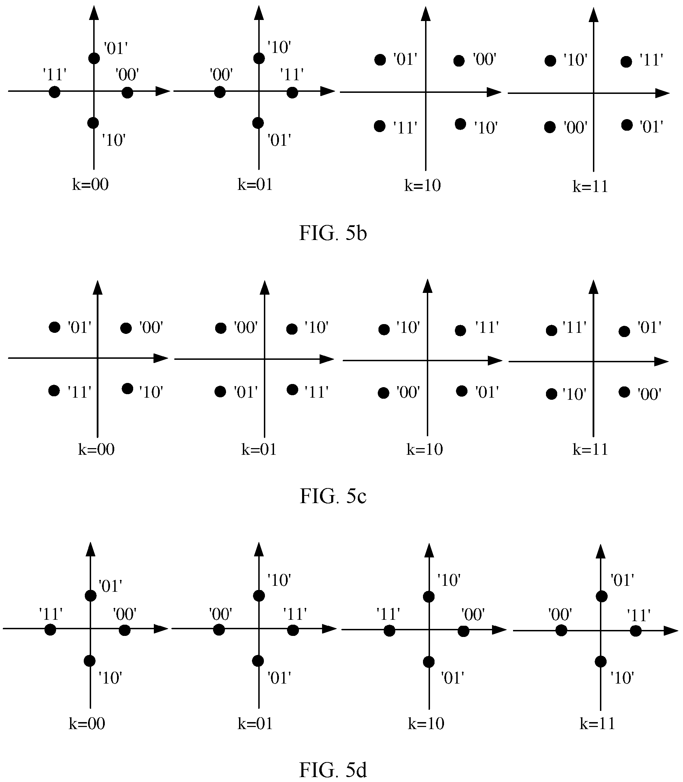

In another example, assuming that the network device performs modulation by using the QPSK, the mapping rule of the information bit in the first identifier may be shown in FIG. 5b or FIG. 5c. It may be understood that FIG. 5b and FIG. 5c are merely examples. When the modulation is performed by using the QPSK, each modulation symbol may correspond to two information bits.

Optionally, as shown in FIG. 5b or Table 3, if control bits are 00, a constellation point is ($\sqrt{2}$, 0) when information bits are 00, a constellation point is (0, $\sqrt{2}$) when information bits are 01, a constellation point is (0, $-\sqrt{2}$) when information bits are 10, or a constellation point is ($-\sqrt{2}$, 0) when information bits are 11. If control bits are 01, a constellation point is ($-\sqrt{2}$, 0) when information bits are 00, a constellation point is (0, $-\sqrt{2}$) when information bits are 01, a constellation point is (0, $\sqrt{2}$) when information bits are 10, or a constellation point is ($\sqrt{2}$, 0) when information bits are 11. If control bits are 10, a constellation point is (1, 1) when information bits are 00, a constellation point is (-1, 1) when information bits are 01, a constellation point is (1, -1) when information bits are 10, or a constellation point is (-1, -1) when information bits are 11. If control bits are 11, a constellation point is (-1, -1) when information bits are 00, a constellation point is (1, -1) when information bits are 01, a constellation point is (-1, 1) when information bits are 10, or a constellation point is (1, 1) when information bits are 11.

**Table 3**

| Value of k | Constellation point when s=00 | Constellation point when s=01 | Constellation point when s=10 | Constellation point when s=11 |
|---|---|---|---|---|
| 00 | ($\sqrt{2}$, 0) | (0, $\sqrt{2}$) | (0, $-\sqrt{2}$) | ($-\sqrt{2}$, 0) |
| 01 | ($-\sqrt{2}$, 0) | (0, $-\sqrt{2}$) | (0, $\sqrt{2}$) | ($\sqrt{2}$, 0) |

(continued)

| Value of k | Constellation point when s=00 | Constellation point when s=01 | Constellation point when s=10 | Constellation point when s=11 |
|---|---|---|---|---|
| 10 | (1, 1) | (-1, 1) | (1, -1) | (-1, -1) |
| 11 | (-1, -1) | (1, -1) | (-1, 1) | (1, 1) |

For example, control bits determined based on the first identifier are 01 00 10 11... (content omitted by using the ellipsis is other control bits), and the first identifier is 11 01 11 01... (content omitted by using the ellipsis is other information bits). For example, when two control bits sequentially control two information bits, for example, when the control bits 01 control the information bits 11, a symbol obtained through modulation of the information bits 11 is ( $\sqrt{2}$ , 0) (for example, may be referred to as a 1st modulation symbol), a symbol obtained through modulation of the information bits 01 is (0, $\sqrt{2}$ ) (for example, may be referred to as a 2nd modulation symbol), a symbol obtained through modulation of the information bits 11 is (-1, -1) (for example, may be referred to as a 3rd modulation symbol), a symbol obtained through modulation of the information bits 01 is (1, -1) (for example, may be referred to as a 4th modulation symbol), and so on.

It may be understood that the correspondences between the different control bits and the different mapping rules shown above are merely examples. For example, a relationship between the information bits and the constellation point that are shown in a 1st row may be determined by the control bits 01; a relationship between the information bits and the constellation point that are shown in a 2nd row may be determined by the control bits 10; a relationship between the information bits and the constellation point that are shown in a 3rd row may be determined by the control bits 11; and a relationship between the information bits and the constellation point that are shown in a 4th row may be determined by the control bits 00. The correspondences between the different control bits and the different mapping rules are not listed one by one herein again. When the control bit changes, a relationship between the information bit and the constellation point also changes accordingly (for example, a relationship between any information bit and a constellation point changes, or a relationship between two information bits and a constellation point changes). This falls within the protection scope of this application.

Optionally, as shown in FIG. 5c or Table 4, if control bits are 00, a constellation point is (1, 1) when information bits are 00, a constellation point is (-1, 1) when information bits are 01, a constellation point is (1, -1) when information bits are 10, or a constellation point is (-1, -1) when information bits are 11. If control bits are 01, a constellation point is (-1, 1) when information bits are 00, a constellation point is (-1, -1) when information bits are 01, a constellation point is (1, 1) when information bits are 10, or a constellation point is (1, -1) when information bits are 11. If control bits are 10, a constellation point is (-1, -1) when information bits are 00, a constellation point is (1, -1) when information bits are 01, a constellation point is (-1, 1) when information bits are 10, or a constellation point is (1, 1) when information bits are 11. If control bits are 11, a constellation point is (1, -1) when information bits are 00, a constellation point is (1, 1) when information bits are 01, a constellation point is (-1, -1) when information bits are 10, or a constellation point is (-1, 1) when information bits are 11.

**Table 4**

| Value of k | Constellation point when s=00 | Constellation point when s=01 | Constellation point when s=10 | Constellation point when s=11 |
|---|---|---|---|---|
| 00 | (1, 1) | (-1, 1) | (1, -1) | (-1, -1) |
| 01 | (-1, 1) | (-1, -1) | (1, 1) | (1, -1) |
| 10 | (-1, -1) | (1, -1) | (-1, 1) | (1, 1) |
| 11 | (1, -1) | (1, 1) | (-1, -1) | (-1, 1) |

According to the mapping rules shown in Table 1 to Table 4, when control bits are different, even for a same type of information bit, constellation points corresponding to the information bit are completely different. Therefore, even if the malicious receiver randomly and blindly guesses the control bit and blindly demodulates the first downlink message, the plurality of modulation symbols cannot be correctly demodulated (in other words, according to the mapping rules described in Table 1 to Table 4, complexity of blind demodulation by the malicious receiver can be increased). In other words, the correspondence between the control bit and the mapping rule shown in this embodiment of this application can effectively confuse the malicious receiver, so that the malicious receiver cannot correctly perform demodulation even in a case of random guessing.

Optionally, as shown in FIG. 5d or Table 5, if control bits are 00, a constellation point is ($\sqrt{2}$, 0) when information bits are 00, a constellation point is (0, $\sqrt{2}$) when information bits are 01, a constellation point is (0, $-\sqrt{2}$) when information bits are 10, or a constellation point is ($-\sqrt{2}$, 0) when information bits are 11. If control bits are 01, a constellation point is ($-\sqrt{2}$, 0) when information bits are 00, a constellation point is (0, $-\sqrt{2}$) when information bits are 01, a constellation point is (0, $\sqrt{2}$) when information bits are 10, or a constellation point is ($\sqrt{2}$, 0) when information bits are 11. If control bits are 10, a constellation point is ($\sqrt{2}$, 0) when information bits are 00, a constellation point is (0, $-\sqrt{2}$) when information bits are 01, a constellation point is (0, $\sqrt{2}$) when information bits are 10, or a constellation point is ($-\sqrt{2}$, 0) when information bits are 11. If control bits are 11, a constellation point is ($-\sqrt{2}$, 0) when information bits are 00, a constellation point is (0, $\sqrt{2}$) when information bits are 01, a constellation point is (0, $-\sqrt{2}$) when information bits are 10, or a constellation point is ($\sqrt{2}$, 0) when information bits are 11.

**Table 5**

| Value of k | Constellation point when s=00 | Constellation point when s=01 | Constellation point when s=10 | Constellation point when s=11 |
|---|---|---|---|---|
| 00 | ($\sqrt{2}$, 0) | (0, $\sqrt{2}$) | (0, $-\sqrt{2}$) | ($-\sqrt{2}$, 0) |
| 01 | ($-\sqrt{2}$, 0) | (0, $-\sqrt{2}$) | (0, $\sqrt{2}$) | ($\sqrt{2}$, 0) |
| 10 | ($\sqrt{2}$, 0) | (0, $-\sqrt{2}$) | (0, $\sqrt{2}$) | ($-\sqrt{2}$, 0) |
| 11 | ($-\sqrt{2}$, 0) | (0, $\sqrt{2}$) | (0, $-\sqrt{2}$) | ($\sqrt{2}$, 0) |

It should be noted that the control bits shown in this embodiment of this application include 00, 01, 10, and 11, and different control bits correspond to different mapping rules. For example, constellation diagrams may be different (as shown in Table 3). Alternatively, even if different control bits correspond to a same constellation diagram, when the control bits are different, information bits in the constellation diagram correspond to different constellation points (as shown in Table 4 or Table 5). Therefore, the mapping rules shown in Table 3 to Table 5 are merely examples, and there may be more manners for the mapping rule, which are not listed one by one in this embodiment of this application.

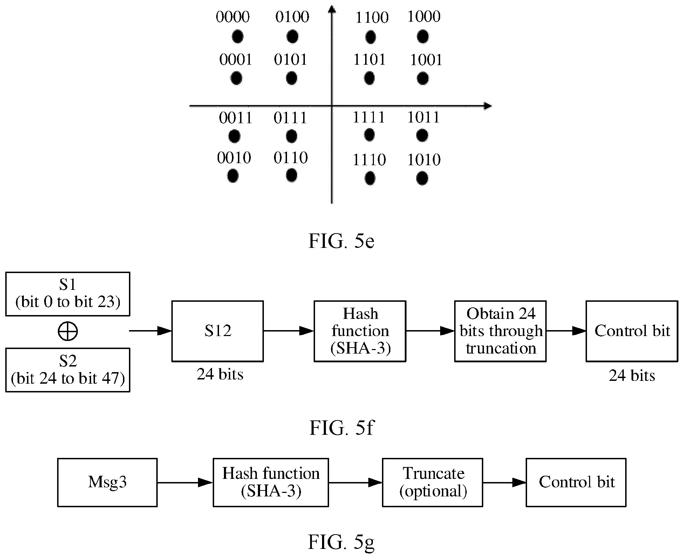

In still another example, assuming that the network device performs modulation by using the 16QAM, the mapping rule of the information bit in the first identifier may be shown in Table 6. It may be understood that FIG. 5e is merely an example. When the modulation is performed by using the 16QAM, each modulation symbol may correspond to four information bits.

**Table 6**

| | Control bits k and k+1 | | | |
|---|---|---|---|---|
| | 00 | 01 | 10 | 11 |
| Path I (information bits k and k+1), from left to right | 00, 01, 11, 10 | 11, 10, 00, 01 | 01, 11, 10, 00 | 10, 00, 01, 11 |
| | Control bits k+2 and k+3 | | | |
| | 00 | 01 | 10 | 11 |
| Path Q (information bits k+2 and k+3), from top to bottom | 00, 01, 11, 10 | 11, 10, 00, 01 | 01, 11, 10, 00 | 10, 00, 01, 11 |

It may be understood that Table 6 shows an example in which the control bits are divided into first two bits and last two bits, and the mapping rule shown in Table 6 should not be understood as a limitation on this embodiment of this application.

To better describe a meaning of the rule provided in the foregoing table, the following provides an example. Considering that control bits k to k+3 are 0000, according to Table 6, a mapping rule between information bits k to k+3 and a point in a constellation diagram is shown in FIG. 5e. For example, horizontal coordinates of constellation points from left to right in FIG. 5e are -3, -1, 1, and 3, and vertical coordinates of constellation points from top to bottom in FIG. 5e are 3, 1, -1, and -3. For example, when the control bits are 0000, a constellation point of the information bits 0000 is (-3, 3), a constellation point of the information bits 0101 is (-1, 1), a constellation point of the information bits 1111 is (1, -1), a constellation point of the information bits 1010 is (3, -3), or a constellation point of the information bits 0001 is (-3, 1). It may be understood that when the control bits are 0000, the mapping rule between the information bits and the constellation point is not listed one by one herein again. For another example, when the control bits are 0001, a constellation point of the information bits 0011 is (-3, 3), a constellation point of the information bits 0110 is (-1, 1), a constellation point of the information bits 1100 is (1, -1), or a constellation point of the information bits 1001 is (3, -3). Details are not listed one by one herein again.

It may be understood that the mapping rule shown in Table 6 is merely an example, and there may be more manners for the mapping rule during actual application. Details are not listed one by one herein again.

For example, the mapping rule may meet the following conditions: First, mapping from the information bit to the constellation point may comply with Gray mapping (to be specific, there is a 1 -bit difference between two adjacent points in the constellation diagram), so that decoding performance of an authorized UE is not affected. Second, under a condition of an unknown control bit combination, the constellation diagram is guessed randomly, resulting in an average bit error rate of 1/2, thereby deteriorating decoding performance of the malicious receiver to the maximum extent. Certainly, the Gray mapping shown in this embodiment of this application is merely an example, and the mapping rule may alternatively not comply with the Gray mapping. When the mapping rule does not comply with the Gray rule, a degree of freedom of the mapping rule is higher, and the mapping rule is more flexible. In addition, the mapping rules shown in FIG. 5a to FIG. 5e may not be used for the constellation diagram, provided that the mapping rule is specified in a protocol or agreed on by a transmitter and a receiver. Details are not described herein again.

A bit length of the control bit shown in this embodiment of this application may be the same as the bit length of the first identifier, so that the control bit is in one-to-one correspondence with the information bit. For example, for the BPSK, a mapping rule of an information bit i may be determined by a control bit i. For the QPSK, a mapping rule of information bits i and i+1 may be determined by control bits i and i+1. Optionally, the length of the control bit may alternatively be less than the bit length of the first identifier. For example, the bit length of the first identifier is 48 bits, and the length of the control bit may be 24 bits. Therefore, the control bits may sequentially control first 24 bits in the first identifier and control last 24 bits in the first identifier; or each bit in the control bits may continuously control two bits in the first identifier. A specific control manner is not limited in this embodiment of this application. Optionally, the length of the control bit may be 12 bits, 20 bits, or the like, and is not listed one by one herein again. It may be understood that the length of the control bit may alternatively be greater than the bit length of the first identifier. For example, the network device may also use the control bit to control a mapping rule of other information included in the first downlink message. For example, the first downlink message may further include information indicating a hybrid automatic repeat request (hybrid automatic repeat request, HARQ) time-frequency resource, and the network device may further modulate, by using the control bit, the information indicating the HARQ time-frequency resource. For a method for modulating, by the network device, the information indicating the HARQ time-frequency resource, and a method for demodulating, by the terminal device, the information indicating the HARQ time-frequency resource, refer to the descriptions of the first identifier in this embodiment of this application. Details are not described one by one herein again.

In this embodiment of this application, the control bit determining method may include the following two manners.

It may be understood that the control bit determining manners shown below are applicable to both the network device and the terminal device.

Manner 1: The control bit is determined based on the first identifier and a random number generation algorithm.

For example, the first identifier may be used as a random seed, and the random number generation algorithm may include a linear congruential method, a Mersenne twister algorithm, and the like.

Manner 2: The control bit is determined based on the first identifier and a hash function.

In an example, the network device may input, to the hash function, the first identifier included in the first uplink message obtained by the network device through decoding, and use an output as the control bit. The network device may use all bits output by the hash function as the control bit, or the network device may truncate the output of the hash function, and reserve a bit whose bit length is the same as that of the first identifier, to use the bit as the control bit. For example, as shown in FIG. 5g, the hash function may be a secure hash algorithm 3 (secure hash algorithm 3, SHA-3), and the first identifier is 48 bits (the Msg3 is used as an example in FIG. 5g). In this case, the network device may obtain, through truncation, first 48 bits output by the SHA-3 (which is merely an example), and use the 48 bits obtained through truncation as the control bits. Therefore, the mapping rule is determined based on the correspondences between the different control bits and the different mapping rules, as shown in Table 1 to Table 6. Details are not described one by one herein again. Correspondingly, after receiving the first downlink message, the terminal device generates control bits also having 48 bits according to the foregoing method based on the first identifier sent by the terminal device in the first uplink message. Then, a mapping rule is determined based on the control bits, the first downlink message is demodulated according to the mapping rule, and 48 bits obtained through demodulation are compared with the first identifier sent by the terminal device in the first uplink message. If the 48 bits are consistent with the first identifier, it indicates that the random access succeeds. If the 48 bits are not consistent with the first identifier, it indicates that the random access fails.

In this embodiment of this application, the control bit may be obtained by inputting the first identifier into the hash function. This is easy to implement and security is high.

In another example, the control bit is determined based on a first partial identifier and the hash function, where the first partial identifier is a part of the first identifier. In other words, a part of the first identifier may be input into the hash function to obtain the control bit. It may be understood that a specific bit length of the first partial identifier is not limited in this embodiment of this application. For example, the first partial identifier may be half of the length of the first identifier, or the length of the first partial identifier may be determined based on uncommon information in the first identifier, or the like. Details are not listed one by one herein again. For example, the first identifier is 48 bits, and the first partial identifier may be first 40 bits in the first identifier. For example, when last eight bits in the first identifier are common information, the control bit is determined based on the first partial identifier.

In still another example, the control bit is determined based on a result of performing an exclusive OR operation on a first partial identifier and a second partial identifier and the hash function, where the first partial identifier and the second partial identifier are respectively parts of the first identifier. For example, the first identifier may be divided into two partial identifiers with an equal length, namely, the first partial identifier and the second partial identifier. The first identifier is divided in this manner, to determine the control bit, so that security is effectively improved on the basis of comprehensively considering the security and complexity. Certainly, a bit length of the first partial identifier and a bit length of the second partial identifier may alternatively be unequal. This is not limited in this embodiment of this application.

For example, as shown in FIG. 5f, the network device may divide 48 bits in the first identifier into two equal-length parts, which are denoted as s1 and s2, and then perform an exclusive OR operation on s1 and s2 bit by bit to obtain s12 whose length is 24 bits. Then, s12 is input into the hash function (an SHA-3 shown in FIG. 5f), an output of the hash function is truncated, and 24 bits are reserved as the control bits. It may be understood that the 24 bits shown herein are merely an example, and should not be construed as a limitation on this embodiment of this application.

Therefore, the network device determines the mapping rule based on the correspondences between the different control bits and the different mapping rules, as shown in Table 1 to Table 6. Details are not described one by one herein again. Then, the first downlink message is broadcast. Correspondingly, after receiving the first downlink message, the terminal device generates control bits also having 24 bits according to the foregoing method based on the first identifier sent by the terminal device in the first uplink message. Then, a mapping rule is determined based on the control bits, the first downlink message is demodulated according to the mapping rule, and 48 bits obtained through demodulation are compared with the first identifier sent by the terminal device in the first uplink message. If the 24 bits are consistent with the first identifier, it indicates that the random access succeeds. If the 24 bits are not consistent with the first identifier, it indicates that the random access fails.

For Implementation 1 shown in this embodiment of this application, after obtaining the first identifier through decoding, the network device may generate the control bit by using the first identifier, and determine the mapping rule between the information bit in the first identifier and the constellation point based on the control bit, to obtain the plurality of modulation symbols. The network device broadcasts the plurality of controlled modulation symbols in the first downlink message. Even if the malicious receiver receives the first downlink message, the first identifier cannot be obtained through demodulation. This avoids the covert communication between the malicious users, and ensures the access success rate of the authorized user. In addition, according to the method shown in this embodiment of this application, no additional air interface overheads are increased.

Implementation 2

The known information is encrypted based on the encryption algorithm and the first identifier to obtain the second identifier, and the modulation is performed based on the second identifier to obtain the plurality of modulation symbols.

The known information may be defined in a protocol, or may be determined by the network device. For example, the known information may be a common sequence, for example, an all-1 sequence. A bit length of the known information may be the same as the bit length of the first identifier, so that processing complexity can be further simplified while security of the first identifier is ensured. Certainly, the bit length of the known information may be greater than or less than the bit length of the first identifier. The encryption algorithm may include a symmetric encryption algorithm, for example, an advanced encryption standard with a key length of 128 bits (advanced encryption standard, AES) (for example, may be referred to as AES-128) or a ZUC algorithm set (for example, may be represented by ZUC). It may be understood that when the bit length of the known information is less than the bit length of the first identifier, the known information may be supplemented, so that a bit length of the supplemented information is greater than or equal to the bit length of the first identifier.

For example, after receiving the first uplink message, the network device decodes the first uplink message, uses the first identifier as a key, and encrypts the common sequence (for example, the all-1 sequence) by using the encryption algorithm. After the encryption is completed, an encrypted sequence may be truncated, and 48 bits are reserved (when the bit length of the first identifier is 48 bits). Then, the reserved 48 bits are modulated to obtain a plurality of modulation symbols. Optionally, when the reserved 48 bits are modulated, the mapping rule between the information bit and the constellation point may be determined based on a constellation diagram, in other words, the 48 bits may be directly modulated. The first identifier is used as the key to encrypt the plaintext, and security is ensured. Therefore, a manner of direct modulation is more efficient and has low complexity. It may be understood that when the first identifier is used as the key, to meet a requirement of a specific encryption algorithm, several bits may be supplemented after the first identifier. For example, a length of a sequence used by the AES-128 is 128 bits. If the bit length of the first identifier is 48 bits, an 80-bit pseudo random number may be supplemented after the first identifier, to form a 128-bit key and encrypt the common sequence. In this case, a length of the obtained encrypted sequence is also 128 bits. Therefore, the encrypted sequence may be truncated, and first 48 bits are reserved. It may be understood that the pseudo random number shown in this embodiment of this application may be a random number sequence calculated by using a deterministic algorithm. The pseudo random number is not a real random number, but has a statistical feature similar to that of a random number, such as uniformity and independence. During calculation of the pseudo random number, if a used initial value (which may also be referred to as a seed) remains unchanged, a number order of the pseudo random number also remains unchanged. The descriptions of the pseudo random number shown herein are merely an example. This is not limited in this embodiment of this application.

Correspondingly, after receiving the first downlink message, the terminal device first generates a local key (key) by using the first identifier sent by the terminal device in the first uplink message and the 80-bit pseudo random number. Then, the common sequence is encrypted by using the key and the encryption algorithm (for example, the AES-128), an encrypted common sequence is truncated to 48 bits, and a bit sequence obtained through the truncation is compared with the demodulated identifier in the first downlink message. If the bit sequence is consistent with the demodulated identifier, it indicates that the random access succeeds. If the bit sequence is not consistent with the demodulated identifier, it indicates that the random access fails.

It should be noted that, even if the common sequence shown in this embodiment of this application is known to all users (including the malicious receiver), in the method shown in this embodiment of this application, because the first uplink message is used as the key to encrypt the common sequence to obtain a ciphertext, for the malicious receiver, even if the malicious receiver obtains the ciphertext and learns of the plaintext (namely, the common sequence), the malicious receiver cannot infer the key based on the ciphertext and the plaintext.

For Implementation 2 shown in this embodiment of this application, after obtaining the first identifier through decoding, the network device does not directly broadcast the first identifier, but encrypts the common sequence by using the first identifier as the key and sends the encrypted sequence. In essence, the first uplink message is used as the key. According to the method shown in Implementation 2, the covert communication between the malicious users is effectively avoided without changing a signal processing process at a physical layer.

Implementation 3

A third identifier is determined based on the first identifier and a hash function, and modulation is performed based on the third identifier to obtain a plurality of modulation symbols.

For example, the network device may input the first identifier into an SHA-3, truncate an output sequence, and reserve first 48 bits as the third identifier. Then, the third identifier is modulated to obtain the plurality of modulation symbols. Optionally, when the third identifier is modulated, the mapping rule between the information bit and the constellation point may be determined based on a constellation diagram, in other words, the 48 bits may be directly modulated. The first identifier is processed by using the hash function, and security is ensured. Therefore, a manner of direct modulation is more efficient and has low complexity.

Correspondingly, after receiving the first downlink message, the terminal device may demodulate the third identifier to obtain a demodulated identifier, input the first identifier sent by the terminal device in the first uplink message into the hash function, truncate an output sequence, and reserve first 48 bits. Then, the reserved first 48 bits are compared with the demodulated identifier. If the reserved first 48 bits are consistent with the demodulated identifier, it indicates that the random access succeeds. If the reserved first 48 bits are not consistent with the demodulated identifier, it indicates that the random access fails.

According to Implementation 3 shown in this embodiment of this application, processing of the first identifier is further simplified while avoiding the covert communication between the malicious users, so that complexity is low, and air interface overheads are not increased.

The three implementations shown above describe in detail the manner in which the network device obtains the plurality of modulation symbols, and the manner in which the terminal device demodulates the plurality of modulation symbols in embodiments of this application. The following uses four-step random access as an example to describe the random access method provided in embodiments of this application. FIG. 6 is a schematic flowchart of a four-step random access method according to an embodiment of this application. As shown in FIG. 6, the method includes the following steps.

601: A UE sends a Msg1 to a base station on a preset time-frequency resource, where the Msg1 includes a pilot (which may also be referred to as a preamble or a random access preamble (random access preamble)). Correspondingly, the base station receives the Msg1.

A function of the Msg1 may be to notify the base station of a random access request, so that the base station can estimate a transmission latency between the base station and the UE based on the Msg1. The transmission latency may be used to calibrate uplink timing (uplink timing).

602: The base station sends a Msg2 (which may also be referred to as a random access response) to the UE, where the Msg2 includes a pilot ID (which may also be referred to as a sequence number of a preamble, and the like), a TA instruction, a time-frequency resource of a Msg3, and other configuration information (such as a radio network temporary identifier). Correspondingly, the UE receives the Msg2.

It may be understood that the TA instruction includes calibration information obtained by the base station based on the transmission latency. Specific information included in the Msg2 is not limited in this embodiment of this application.

603: The UE sends the Msg3 to the base station, where the Msg3 includes a first identifier (for example, a 48-bit MAC address). Correspondingly, the base station receives the Msg3.

It may be understood that, when the UE receives the Msg2, if a pilot indicated by the pilot ID included in the Msg2 is the same as the pilot sent by the UE in the Msg1, the UE may consider that the Msg2 is a response to the UE. Therefore, the UE sends the Msg3 on an uplink resource (namely, the time-frequency resource of the Msg3) indicated in the Msg2.

604: The base station broadcasts a Msg4, where the Msg4 includes a plurality of modulation symbols. Correspondingly, the UE receives the Msg4.

For a modulation process of the plurality of modulation symbols and a demodulation process of the plurality of modulation symbols, refer to step 402 shown in FIG. 4 and Implementation 1 to Implementation 3 shown above. Details are not described one by one herein again.

The following provides descriptions based on an identity of the UE and a conflict resolution result.

(1) If the UE is an authorized user and does not conflict with another UE, or wins in conflict resolution, the Msg3 sent by the UE is a Msg3 successfully obtained by the base station through decoding. In this case, the UE can learn of a manner in which the base station determines a control bit and a mapping rule. Therefore, a Msg4 obtained by the UE through decoding is consistent with the Msg3 previously generated by the UE (which means that the UE may obtain, through demodulation, a part of bits corresponding to the Msg3 from the Msg4 (for example, the Msg4 includes 100 bits in total, where first 48 bits are 48 bits in the Msg3 successfully obtained by the base station through decoding, and last 52 bits may be other information. Therefore, the UE may determine whether the first 48 bits obtained by the UE through demodulation from the Msg4 are consistent with the Msg3 previously generated by the UE)). In this case, the UE learns that the UE is allowed to access a network. Alternatively, the UE can learn of an encryption key used by the base station. Therefore, a sequence obtained after the UE encrypts a common sequence and performs truncation is completely consistent with the Msg4. In this case, the UE learns that the UE is allowed to access a network. Alternatively, a sequence obtained after the UE processes, by using a hash function, the Msg3 previously generated by the UE and performs truncation is completely consistent with the Msg4. In this case, the UE learns that the UE is allowed to access a network.

(2) If the UE is an authorized user but does not win in conflict resolution, the Msg3 sent by the UE is not a Msg3 successfully obtained by the base station through decoding. In this case, a control bit and a mapping rule that are obtained by the UE based on the Msg3 previously generated by the UE are inconsistent with those used by the base station. Therefore, a Msg4 obtained through decoding is inconsistent with the Msg3 previously generated by the UE. Based on a decoding result, the UE learns that the UE is not allowed to access a network. Alternatively, the UE cannot learn of a key used by the base station. Therefore, a sequence obtained after the UE encrypts a common sequence and performs truncation is inconsistent with the Msg4. In this case, the UE learns that the UE is not allowed to access a network. Alternatively, a sequence obtained after the UE processes, by using a hash function, the Msg3 previously generated by the UE and performs truncation is inconsistent with the Msg4. In this case, the UE learns that the UE is not allowed to access a network.

(3) If the UE is a malicious receiver, and a malicious transmitter does not conflict with another UE, or wins in conflict resolution, because the malicious receiver does not learn of the Msg3, the malicious receiver cannot learn of a mapping rule and a manner in which the base station determines a control bit, and therefore cannot obtain a Msg4 through decoding. Alternatively, the malicious receiver cannot learn of a key used by the base station. According to a principle of a symmetric encryption algorithm, the malicious receiver cannot infer the key by using a ciphertext (the Msg4) and a plaintext (the foregoing common sequence), and therefore cannot implement covert communication. Alternatively, based on irreversibility of a hash function and a truncation operation, the malicious receiver cannot infer the Msg3 from the Msg4, and therefore cannot implement covert communication.

(4) If the UE is a malicious receiver and a malicious transmitter does not win in conflict resolution, the malicious receiver cannot obtain a Msg3 sent by the malicious transmitter through decoding.

It can be learned from the four cases that, according to the method provided in this embodiment of this application, it is effectively ensured that an access success rate of an authorized user is not affected, and a secure access mechanism is implemented, thereby avoiding a phenomenon of covert communication. In addition, in this embodiment of this application, a bit length corresponding to the plurality of modulation symbols in the Msg4 broadcast by the base station is still 48 bits, which is consistent with the 48-bit MAC address, and no additional air interface overheads are increased.

In comparison with the random access method shown in FIG. 1, according to the random access method provided in this application, a more secure random access mechanism can be provided, so that a random access air interface resource is not used by the malicious user to implement covert communication, thereby ensuring random access performance of the authorized user. In addition, according to the random access method provided in this application, air interface resource overheads does not need to be increased, and performance such as the access success rate of the authorized user is not affected. In addition, the method is easy to implement, and can be compatible with a random access protocol in a 4G or 5G system.

The following describes communication apparatuses provided in embodiments of this application.

In this application, the communication apparatus is divided into function modules based on the foregoing method embodiments. For example, the communication apparatus may be divided into function modules based on corresponding functions, or two or more functions may be integrated into one processing module. The integrated module may be implemented in a form of hardware, or may be implemented in a form of a software functional module. It should be noted that, in this application, division into the modules is an example, and is merely logical function division. During actual implementation, another division manner may be used. The following describes in detail the communication apparatuses in embodiments of this application with reference to FIG. 7 to FIG. 9.

FIG. 7 is a diagram of a structure of a communication apparatus according to an embodiment of this application. As shown in FIG. 7, the communication apparatus includes a processing unit 701 and a transceiver unit 702.

In some embodiments of this application, the communication apparatus may be used for the step, the function, or the like performed by the terminal device shown above. For example, the communication apparatus may be a terminal device or a chip, and the chip may be disposed in the terminal device.

The transceiver unit 702 is configured to output a first uplink message, where the first uplink message includes a first identifier.

The transceiver unit 702 is further configured to input a first downlink message, where the first downlink message includes a plurality of modulation symbols.

The processing unit 701 is configured to process the plurality of modulation symbols based on the first identifier to obtain a processed identifier.

For example, that the transceiver unit 702 is configured to output the first uplink message may include: The transceiver unit 702 is configured to send the first uplink message to a network device. Alternatively, after obtaining the first uplink message, the processing unit 701 outputs the first uplink message to a transceiver or the like via the transceiver unit 702. A specific implementation of the transceiver unit is not limited in this embodiment of this application.

For example, that the transceiver unit 702 is configured to input the first downlink message may include: The transceiver unit 702 is configured to receive the first downlink message from the network device. Alternatively, after being obtained through an antenna, the first downlink message is input to the processing unit 701 or the like via the transceiver unit 702. The specific implementation of the transceiver unit is not limited in this embodiment of this application.

In a possible implementation, the processing unit 701 is specifically configured to determine a mapping rule between an information bit and a constellation point based on the first identifier, and demodulate the plurality of modulation symbols according to the mapping rule.

In a possible implementation, the processing unit 701 is specifically configured to determine a control bit based on the first identifier, and determine the mapping rule based on correspondences between different control bits and different mapping rules.

In a possible implementation, the processing unit 701 is specifically configured to determine the control bit based on the first identifier and a random number generation algorithm, or determine the control bit based on the first identifier and a hash function.

In a possible implementation, the processing unit 701 is specifically configured to determine the control bit based on a result of performing an exclusive OR operation on a first partial identifier and a second partial identifier and the hash function, where the first partial identifier and the second partial identifier are respectively parts of the first identifier.

In a possible implementation, the processing unit 701 is further configured to: when a demodulated identifier is the same as the first identifier, determine that random access of the communication apparatus succeeds.

In a possible implementation, the processing unit 701 is specifically configured to demodulate the plurality of modulation symbols to obtain a demodulated identifier, and encrypt known information based on an encryption algorithm and the first identifier to obtain a second identifier, where the known information is defined in a protocol or determined by the network device.

In a possible implementation, the processing unit 701 is further configured to: when the second identifier is the same as the demodulated identifier, determine that random access of the communication apparatus succeeds.

It may be understood that specific descriptions of the transceiver unit and the processing unit shown in this embodiment of this application are merely examples. For a specific function or step, or the like of the transceiver unit and the processing unit, refer to the foregoing method embodiments (for example, including FIG. 4, FIG. 5a to FIG. 5g, and FIG. 6). Details are not described herein again.

FIG. 7 is reused. In some other embodiments of this application, the communication apparatus may be configured to perform the step, the function, or the like performed by the network device in the foregoing method embodiments. For example, the communication apparatus may be a network device or a chip, and the chip may be disposed in the network device.

The transceiver unit 702 is configured to input a first uplink message, where the first uplink message includes a first identifier.

The processing unit 701 is configured to determine a mapping rule between an information bit and a constellation point based on the first identifier, and modulate the first identifier according to the mapping rule to obtain a plurality of modulation symbols.

The transceiver unit 702 is further configured to output a first downlink message, where the first downlink message includes the plurality of modulation symbols.

For example, that the transceiver unit 702 is configured to input the first uplink message may include: The transceiver unit 702 is configured to receive the first uplink message from the terminal device. Alternatively, after being obtained through an antenna, the first uplink message is input to the processing unit 701 or the like via the transceiver unit 702. A specific implementation of the transceiver unit is not limited in this embodiment of this application.

For example, that the transceiver unit 702 is configured to output the first downlink message may include: The transceiver unit 702 is configured to send the first downlink message to the terminal device. Alternatively, after the processing unit 701 obtains the first downlink message, the first downlink message is output to a transceiver or the like via the transceiver unit 702. The specific implementation of the transceiver unit is not limited in this embodiment of this application.

In a possible implementation, the processing unit 701 is specifically configured to determine a control bit based on the first identifier, and determine the mapping rule based on correspondences between different control bits and different mapping rules.

In a possible implementation, the processing unit 701 is specifically configured to determine the control bit based on the first identifier and a random number generation algorithm, or determine the control bit based on the first identifier and a hash function.

In a possible implementation, the processing unit 701 is specifically configured to determine the control bit based on a result of performing an exclusive OR operation on a first partial identifier and a second partial identifier and the hash function, where the first partial identifier and the second partial identifier are respectively parts of the first identifier.

In still some embodiments of this application, the transceiver unit 702 is configured to input a first uplink message, where the first uplink message includes a first identifier.

The processing unit 701 is configured to encrypt known information based on an encryption algorithm and the first identifier to obtain a second identifier, and modulate the second identifier to obtain a plurality of modulation symbols, where the known information is defined in a protocol or determined by the network device.

The transceiver unit 702 is further configured to output a first downlink message, where the first downlink message includes the plurality of modulation symbols.

It may be understood that specific descriptions of the transceiver unit and the processing unit shown in this embodiment of this application are merely examples. For a specific function or step, or the like of the transceiver unit and the processing unit, refer to the foregoing method embodiments (for example, including FIG. 4, FIG. 5a to FIG. 5g, and FIG. 6). Details are not described herein again.

It may be understood that, for descriptions of the first uplink message, the first downlink message, the first identifier, the mapping rule, the control bit, the second identifier, the plurality of modulation symbols, and the like in the foregoing embodiment, refer to the foregoing descriptions. Details are not described one by one herein again.

The foregoing describes the communication apparatus in embodiments of this application. The following describes a possible product form of the communication apparatus. It should be understood that a product in any form having the function of the communication apparatus described in FIG. 7 falls within the protection scope of embodiments of this application. It should be further understood that the following descriptions are merely examples, and a product form of the communication apparatus in embodiments of this application is not limited thereto.

In a possible implementation, in the communication apparatus shown in FIG. 7, the processing unit 701 may be one or more processors; and the transceiver unit 702 may be a transceiver, or the transceiver unit 702 may be a sending unit and a receiving unit. The sending unit may be a transmitter, the receiving unit may be a receiver, and the sending unit and the receiving unit are integrated into one device, for example, a transceiver. In this embodiment of this application, the processor and the transceiver may be coupled, or the like. A manner of connecting the processor and the transceiver is not limited in this embodiment of this application.

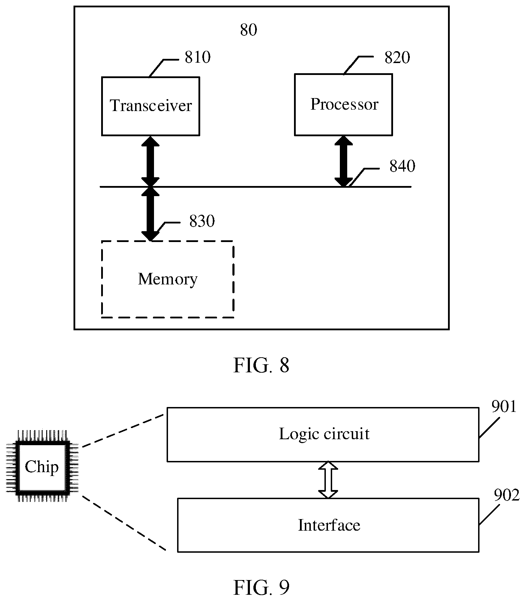

As shown in FIG. 8, a communication apparatus 80 includes one or more processors 820 and a transceiver 810.

For example, when the communication apparatus is configured to perform the step, the method, or the function performed by the terminal device, the transceiver 810 is configured to send a first uplink message to a network device, and receive a first downlink message from the network device. The processor 820 is configured to process a plurality of modulation symbols based on a first identifier to obtain a processed identifier.

For example, when the communication apparatus is configured to perform the step, the method, or the function performed by the network device, the transceiver 810 is configured to receive a first uplink message from a terminal device. The processor 820 is configured to determine a mapping rule between an information bit and a constellation point based on a first identifier, and modulate the first identifier according to the mapping rule to obtain a plurality of modulation symbols. The transceiver 810 is further configured to send a first downlink message to the terminal device.

It may be understood that, in this embodiment of this application, for descriptions of the first uplink message, the first downlink message, the first identifier, the mapping rule, the control bit, the second identifier, the plurality of modulation symbols, and the like, refer to the foregoing descriptions. Details are not described one by one herein again.

It may be understood that, for specific descriptions of the processor and the transceiver, refer to the descriptions of the processing unit and the transceiver unit shown in FIG. 7. Details are not described herein again.

In various implementations of the communication apparatus shown in FIG. 8, the transceiver may include a receiver and a transmitter. The receiver is configured to perform a receiving function (or operation). The transmitter is configured to perform a transmitting function (or operation). In addition, the transceiver is configured to communicate with another device/apparatus through a transmission medium.

Optionally, the communication apparatus 80 may further include one or more memories 830, configured to store program instructions and/or data (such as the configuration list shown in embodiments of this application). The memory 830 is coupled to the processor 820. The coupling in this embodiment of this application is an indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. Optionally, at least one of the one or more memories may be integrated into the processor.

In this embodiment of this application, a specific connection medium among the transceiver 810, the processor 820 and the memory 830 is not limited. In embodiments of this application, in FIG. 8, the memory 830, the processor 820, and the transceiver 810 are connected to each other through a bus 840. The bus is represented by using a thick line in FIG. 8. A manner of connection between other components is merely an example for description, and is not limited thereto. The bus may be classified into an address bus, a data bus, a control bus, and the like. For ease of representation, only one thick line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction structure or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, when the communication apparatus is configured to implement the steps or functions performed by the terminal device, the processor 820 may be mainly configured to process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to perform conversion between a baseband signal and a radio frequency signal and process the radio frequency signal. The antenna is mainly configured to receive and send a radio frequency signal in an electromagnetic wave form. An input/output apparatus, such as a touchscreen, a display, or a keyboard, is mainly configured to receive data input by a user and output data to the user. After the communication apparatus is powered on, the processor 820 may read the software program in the memory 830, interpret and execute instructions of the software program, and process the data of the software program. When data needs to be sent wirelessly, the processor 820 performs baseband processing on the to-be-sent data, and then outputs a baseband signal to a radio frequency circuit. The radio frequency circuit performs radio frequency processing on the baseband signal, and then sends the radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in embodiments of this application may further have more components than those in FIG. 8, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 7, the processing unit 701 may be one or more logic circuits, and the transceiver unit 702 may be an input/output interface, or may be referred to as a communication interface, an interface circuit, an interface, or the like. Alternatively, the transceiver unit 702 may be a sending unit and a receiving unit. The sending unit may be an output interface, and the receiving unit may be an input interface. The sending unit and the receiving unit are integrated into one unit, for example, an input/output interface. As shown in FIG. 9, a communication apparatus shown in FIG. 9 includes a logic circuit 901 and an interface 902. In other words, the processing unit 701 may be implemented by using the logic circuit 901, and the transceiver unit 702 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform the method, the function, or the step performed by the terminal device, the interface 902 is configured to output a first uplink message, where the first uplink message includes a first identifier. The interface 902 is further configured to input a first downlink message, where the first downlink message includes a plurality of modulation symbols. The logic circuit 901 is configured to process the plurality of modulation symbols based on the first identifier to obtain a processed identifier.

In a possible implementation, the logic circuit 901 is specifically configured to determine a mapping rule between an information bit and a constellation point based on the first identifier, and demodulate the plurality of modulation symbols according to the mapping rule.

In a possible implementation, the logic circuit 901 is specifically configured to determine a control bit based on the first identifier, and determine the mapping rule based on correspondences between different control bits and different mapping rules.

In a possible implementation, the logic circuit 901 is specifically configured to determine the control bit based on the first identifier and a random number generation algorithm, or determine the control bit based on the first identifier and a hash function.

In a possible implementation, the logic circuit 901 is specifically configured to determine the control bit based on a result of performing an exclusive OR operation on a first partial identifier and a second partial identifier and the hash function, where the first partial identifier and the second partial identifier are respectively parts of the first identifier.

In a possible implementation, the logic circuit 901 is further configured to: when a demodulated identifier is the same as the first identifier, determine that random access of the communication apparatus succeeds.

In a possible implementation, the logic circuit 901 is specifically configured to demodulate the plurality of modulation symbols to obtain a demodulated identifier, and encrypt known information based on an encryption algorithm and the first identifier to obtain a second identifier, where the known information is defined in a protocol or determined by a network device.

In a possible implementation, the logic circuit 901 is further configured to: when the second identifier is the same as the demodulated identifier, determine that random access of the communication apparatus succeeds.

For example, when the communication apparatus is configured to perform the method, the function, or the step performed by the network device, the interface 902 is configured to input a first uplink message, where the first uplink message includes a first identifier. The logic circuit 901 is configured to determine a mapping rule between an information bit and a constellation point based on the first identifier, and modulate the first identifier according to the mapping rule to obtain a plurality of modulation symbols. The interface 902 is further configured to output a first downlink message, where the first downlink message includes the plurality of modulation symbols.

In a possible implementation, the logic circuit 901 is specifically configured to determine a control bit based on the first identifier, and determine the mapping rule based on correspondences between different control bits and different mapping rules.

In a possible implementation, the logic circuit 901 is specifically configured to determine the control bit based on the first identifier and a random number generation algorithm, or determine the control bit based on the first identifier and a hash function.

In a possible implementation, the logic circuit 901 is specifically configured to determine the control bit based on a result of performing an exclusive OR operation on a first partial identifier and a second partial identifier and the hash function, where the first partial identifier and the second partial identifier are respectively parts of the first identifier.

In still some embodiments of this application, the interface 902 is configured to input a first uplink message, where the first uplink message includes a first identifier. The logic circuit 901 is configured to encrypt known information based on an encryption algorithm and the first identifier to obtain a second identifier, and modulate the second identifier to obtain a plurality of modulation symbols, where the known information is defined in a protocol or determined by the network device. The interface 902 is further configured to output a first downlink message, where the first downlink message includes the plurality of modulation symbols.

It may be understood that the communication apparatus shown in this embodiment of this application may implement the method provided in embodiments of this application in a form of hardware, or may implement the method provided in embodiments of this application in a form of software. This is not limited in this embodiment of this application.

It may be understood that, for descriptions of the first uplink message, the first downlink message, the first identifier, the mapping rule, the control bit, the second identifier, the plurality of modulation symbols, and the like in the foregoing embodiment, refer to the foregoing descriptions. Details are not described one by one herein again. For specific implementations of the embodiments shown in FIG. 9, refer to the foregoing embodiments. Details are not described herein again.

An embodiment of this application further provides a wireless communication system. The wireless communication system includes a network device and a terminal device. The network device and the terminal device may be configured to perform the method in any one of the foregoing embodiments (for example, FIG. 4, FIG. 5a to FIG. 5g, and FIG. 6).

In addition, this application further provides a computer program. The computer program is used to implement an operation and/or processing performed by the terminal device in the method provided in this application.

This application further provides a computer program. The computer program is used to implement an operation and/or processing performed by the network device in the method provided in this application.

This application further provides a computer-readable storage medium. The computer-readable storage medium stores computer code. When the computer code is run on a computer, the computer is enabled to perform an operation and/or processing performed by the terminal device in the method provided in this application.

This application further provides a computer-readable storage medium. The computer-readable storage medium stores computer code. When the computer code is run on a computer, the computer is enabled to perform an operation and/or processing performed by the network device in the method provided in this application.

This application further provides a computer program product. The computer program product includes computer code or a computer program. When the computer code or the computer program is run on a computer, an operation and/or processing performed by the terminal device in the method provided in this application is performed.

This application further provides a computer program product. The computer program product includes computer code or a computer program. When the computer code or the computer program is run on a computer, an operation and/or processing performed by the network device in the method provided in this application is performed.

In embodiments provided in this application, it should be understood that the disclosed systems, apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. A part or all of the units may be selected based on an actual requirement to implement the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a readable storage medium and includes a plurality of instructions for instructing a computer device (which may be a personal computer, a server, or a network device) to perform all or a part of the steps of the methods described in embodiments of this application. The storage medium includes various readable media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A random access method, wherein the method is applied to a terminal device, and the method comprises:

   sending a first uplink message to a network device, wherein the first uplink message comprises a first identifier;
   receiving a first downlink message from the network device, wherein the first downlink message comprises a plurality of modulation symbols; and
   processing the plurality of modulation symbols based on the first identifier to obtain a processed identifier.

2. The method according to claim 1, wherein the processing the plurality of modulation symbols based on the first identifier comprises:

   determining a mapping rule between an information bit and a constellation point based on the first identifier; and
   demodulating the plurality of modulation symbols according to the mapping rule.

3. The method according to claim 2, wherein the determining a mapping rule between an information bit and a constellation point based on the first identifier comprises:
   determining a control bit based on the first identifier, and determining the mapping rule based on correspondences between different control bits and different mapping rules.

4. The method according to claim 3, wherein the determining a control bit based on the first identifier comprises:

   determining the control bit based on the first identifier and a random number generation algorithm; or
   determining the control bit based on the first identifier and a hash function.

5. The method according to claim 4, wherein the determining the control bit based on the first identifier and a hash function comprises:
   determining the control bit based on a result of performing an exclusive OR operation on a first partial identifier and a second partial identifier and the hash function, wherein the first partial identifier and the second partial identifier are respectively parts of the first identifier.

6. The method according to any one of claims 3 to 5, wherein

   a modulation scheme of the plurality of modulation symbols comprises binary phase shift keying BPSK, wherein when the control bit is 0, the constellation point is (-1, 0) when the information bit is 0, or the constellation point is (1, 0) when the information bit is 1; or when the control bit is 1, the constellation point is (1, 0) when the information bit is 0, or the constellation point is (-1, 0) when the information bit is 1;

a modulation scheme of the plurality of modulation symbols comprises quadrature phase shift keying QPSK, wherein when the control bit is 00, the constellation point is ($\sqrt{2}$, 0) when the information bit is 00, the constellation point is (0, $\sqrt{2}$) when the information bit is 01, the constellation point is (0, - V2) when the information bit is 10, or the constellation point is ($-\sqrt{2}$, 0) when the information bit is 11; when the control bit is 01, the constellation point is ($-\sqrt{2}$, 0) when the information bit is 00, the constellation point is (0, $-\sqrt{2}$) when the information bit is 01, the constellation point is (0, $\sqrt{2}$) when the information bit is 10, or the constellation point is ($\sqrt{2}$, 0) when the information bit is 11; when the control bit is 10, the constellation point is (1, 1) when the information bit is 00, the constellation point is (-1, 1) when the information bit is 01, the constellation point is (1, -1) when the information bit is 10, or the constellation point is (-1, -1) when the information bit is 11; or when the control bit is 11, the constellation point is (-1, -1) when the information bit is 00, the constellation point is (1, -1) when the information bit is 01, the constellation point is (-1, 1) when the information bit is 10, or the constellation point is (1, 1) when the information bit is 11; or

a modulation scheme of the plurality of modulation symbols comprises quadrature phase shift keying QPSK, wherein when the control bit is 00, the constellation point is (1, 1) when the information bit is 00, the constellation point is (-1, 1) when the information bit is 01, the constellation point is (1, -1) when the information bit is 10, or the constellation point is (-1, -1) when the information bit is 11; when the control bit is 01, the constellation point is (-1, 1) when the information bit is 00, the constellation point is (-1, -1) when the information bit is 01, the constellation point is (1, 1) when the information bit is 10, or the constellation point is (1, -1) when the information bit is 11; when the control bit is 10, the constellation point is (-1, -1) when the information bit is 00, the constellation point is (1, -1) when the information bit is 01, the constellation point is (-1, 1) when the information bit is 10, or the constellation point is (1, 1) when the information bit is 11; or when the control bit is 11, the constellation point is (1, -1) when the information bit is 00, the constellation point is (1, 1) when the information bit is 01, the constellation point is (-1, -1) when the information bit is 10, or the constellation point is (-1, 1) when the information bit is 11.

7. The method according to any one of claims 3 to 6, wherein a bit length of the first identifier is equal to a bit length of the control bit.

8. The method according to claim 1, wherein the processing the plurality of modulation symbols based on the first identifier comprises:

   demodulating the plurality of modulation symbols to obtain a demodulated identifier; and
   encrypting known information based on an encryption algorithm and the first identifier to obtain a second identifier, wherein the known information is defined in a protocol or determined by the network device.

9. The method according to claim 8, wherein the method further comprises:
   when the second identifier is the same as the demodulated identifier, determining that random access of the terminal device succeeds.

10. A random access method, wherein the method is applied to a network device, and the method comprises:

    receiving a first uplink message from a terminal device, wherein the first uplink message comprises a first identifier;
    determining a mapping rule between an information bit and a constellation point based on the first identifier, and modulating the first identifier according to the mapping rule to obtain a plurality of modulation symbols; and
    sending a first downlink message to the terminal device, wherein the first downlink message comprises the plurality of modulation symbols.

11. The method according to claim 10, wherein the determining a mapping rule between an information bit and a constellation point based on the first identifier comprises:
    determining a control bit based on the first identifier, and determining the mapping rule based on correspondences between different control bits and different mapping rules.

**12.** The method according to claim 11, wherein the determining a control bit based on the first identifier comprises:

determining the control bit based on the first identifier and a random number generation algorithm; or
determining the control bit based on the first identifier and a hash function.

**13.** The method according to claim 12, wherein the determining the control bit based on the first identifier and a hash function comprises:
determining the control bit based on a result of performing an exclusive OR operation on a first partial identifier and a second partial identifier and the hash function, wherein the first partial identifier and the second partial identifier are respectively parts of the first identifier.

**14.** The method according to any one of claims 11 to 13, wherein

a modulation scheme of the plurality of modulation symbols comprises binary phase shift keying BPSK, wherein when the control bit is 0, the constellation point is (-1, 0) when the information bit is 0, or the constellation point is (1, 0) when the information bit is 1; or when the control bit is 1, the constellation point is (1, 0) when the information bit is 0, or the constellation point is (-1, 0) when the information bit is 1;

a modulation scheme of the plurality of modulation symbols comprises quadrature phase shift keying QPSK, wherein when the control bit is 00, the constellation point is ( $\sqrt{2}$, 0) when the information bit is 00, the constellation point is (0, $\sqrt{2}$ ) when the information bit is 01, the constellation point is (0, - V2) when the information bit is 10, or the constellation point is ( $-\sqrt{2}$, 0) when the information bit is 11; when the control bit is 01, the constellation point is ( $-\sqrt{2}$, 0) when the information bit is 00, the constellation point is (0, $-\sqrt{2}$ ) when the information bit is 01, the constellation point is (0, $\sqrt{2}$ ) when the information bit is 10, or the constellation point is ( $\sqrt{2}$, 0) when the information bit is 11; when the control bit is 10, the constellation point is (1, 1) when the information bit is 00, the constellation point is (-1, 1) when the information bit is 01, the constellation point is (1, -1) when the information bit is 10, or the constellation point is (-1, -1) when the information bit is 11; or when the control bit is 11, the constellation point is (-1, -1) when the information bit is 00, the constellation point is (1, -1) when the information bit is 01, the constellation point is (-1, 1) when the information bit is 10, or the constellation point is (1, 1) when the information bit is 11; or

a modulation scheme of the plurality of modulation symbols comprises quadrature phase shift keying QPSK, wherein when the control bit is 00, the constellation point is (1, 1) when the information bit is 00, the constellation point is (-1, 1) when the information bit is 01, the constellation point is (1, -1) when the information bit is 10, or the constellation point is (-1, -1) when the information bit is 11; when the control bit is 01, the constellation point is (-1, 1) when the information bit is 00, the constellation point is (-1, -1) when the information bit is 01, the constellation point is (1, 1) when the information bit is 10, or the constellation point is (1, -1) when the information bit is 11; when the control bit is 10, the constellation point is (-1, -1) when the information bit is 00, the constellation point is (1, -1) when the information bit is 01, the constellation point is (-1, 1) when the information bit is 10, or the constellation point is (1, 1) when the information bit is 11; or when the control bit is 11, the constellation point is (1, -1) when the information bit is 00, the constellation point is (1, 1) when the information bit is 01, the constellation point is (-1, -1) when the information bit is 10, or the constellation point is (-1, 1) when the information bit is 11.

**15.** The method according to any one of claims 10 to 14, wherein a bit length of the first identifier is equal to a bit length of the control bit.

**16.** A random access method, wherein the method is applied to a network device, and the method comprises:

receiving a first uplink message from a terminal device, wherein the first uplink message comprises a first identifier;
encrypting known information based on an encryption algorithm and the first identifier to obtain a second identifier, and modulating the second identifier to obtain a plurality of modulation symbols, wherein the known information is defined in a protocol or determined by the network device; and
sending a first downlink message to the terminal device, wherein the first downlink message comprises the plurality of modulation symbols.

17. A communication apparatus, wherein the apparatus comprises:

a transceiver unit, configured to send a first uplink message to a network device, wherein the first uplink message comprises a first identifier, wherein

the transceiver unit is further configured to receive a first downlink message from the network device, wherein the first downlink message comprises a plurality of modulation symbols; and

a processing unit, configured to process the plurality of modulation symbols based on the first identifier to obtain a processed identifier.

18. The apparatus according to claim 17, wherein the processing unit is specifically configured to determine a mapping rule between an information bit and a constellation point based on the first identifier, and demodulate the plurality of modulation symbols according to the mapping rule.

19. The apparatus according to claim 18, wherein the processing unit is specifically configured to determine a control bit based on the first identifier, and determine the mapping rule based on correspondences between different control bits and different mapping rules.

20. The apparatus according to claim 19, wherein the processing unit is specifically configured to determine the control bit based on the first identifier and a random number generation algorithm, or determine the control bit based on the first identifier and a hash function.

21. The apparatus according to claim 20, wherein the processing unit is specifically configured to determine the control bit based on a result of performing an exclusive OR operation on a first partial identifier and a second partial identifier and the hash function, wherein the first partial identifier and the second partial identifier are respectively parts of the first identifier.

22. The apparatus according to any one of claims 19 to 21, wherein

a modulation scheme of the plurality of modulation symbols comprises binary phase shift keying BPSK, wherein when the control bit is 0, the constellation point is (-1, 0) when the information bit is 0, or the constellation point is (1, 0) when the information bit is 1; or when the control bit is 1, the constellation point is (1, 0) when the information bit is 0, or the constellation point is (-1, 0) when the information bit is 1;

a modulation scheme of the plurality of modulation symbols comprises quadrature phase shift keying QPSK, wherein when the control bit is 00, the constellation point is ($\sqrt{2}$, 0) when the information bit is 00, the constellation point is (0, $\sqrt{2}$) when the information bit is 01, the constellation point is (0, - V2) when the information bit is 10, or the constellation point is ($-\sqrt{2}$, 0) when the information bit is 11; when the control bit is 01, the constellation point is ($-\sqrt{2}$, 0) when the information bit is 00, the constellation point is (0, $-\sqrt{2}$) when the information bit is 01, the constellation point is (0, $\sqrt{2}$) when the information bit is 10, or the constellation point is ($\sqrt{2}$, 0) when the information bit is 11; when the control bit is 10, the constellation point is (1, 1) when the information bit is 00, the constellation point is (-1, 1) when the information bit is 01, the constellation point is (1, -1) when the information bit is 10, or the constellation point is (-1, -1) when the information bit is 11; or when the control bit is 11, the constellation point is (-1, -1) when the information bit is 00, the constellation point is (1, -1) when the information bit is 01, the constellation point is (-1, 1) when the information bit is 10, or the constellation point is (1, 1) when the information bit is 11; or

a modulation scheme of the plurality of modulation symbols comprises quadrature phase shift keying QPSK, wherein when the control bit is 00, the constellation point is (1, 1) when the information bit is 00, the constellation point is (-1, 1) when the information bit is 01, the constellation point is (1, -1) when the information bit is 10, or the constellation point is (-1, -1) when the information bit is 11; when the control bit is 01, the constellation point is (-1, 1) when the information bit is 00, the constellation point is (-1, -1) when the information bit is 01, the constellation point is (1, 1) when the information bit is 10, or the constellation point is (1, -1) when the information bit is 11; when the control bit is 10, the constellation point is (-1, -1) when the information bit is 00, the constellation point is (1, -1) when the information bit is 01, the constellation point is (-1, 1) when the information bit is 10, or the constellation point is (1, 1) when the information bit is 11; or when the control bit is 11, the constellation point is (1, -1) when the information bit is 00, the constellation point is (1, 1) when the information bit is 01, the constellation point is (-1, -1) when the information bit is 10, or the constellation point is (-1, 1) when the information bit is 11.

23. The apparatus according to any one of claims 19 to 22, wherein a bit length of the first identifier is equal to a bit length of the control bit.

24. The apparatus according to claim 17, wherein the processing unit is specifically configured to demodulate the plurality of modulation symbols to obtain a demodulated identifier, and encrypt known information based on an encryption algorithm and the first identifier to obtain a second identifier, wherein the known information is defined in a protocol or determined by the network device.

25. The apparatus according to claim 24, wherein the processing unit is further configured to: when the second identifier is the same as the demodulated identifier, determine that random access of the communication apparatus succeeds.

26. A random access apparatus, wherein the apparatus comprises:

a transceiver unit, configured to receive a first uplink message from a terminal device, wherein the first uplink message comprises a first identifier; and
a processing unit, configured to determine a mapping rule between an information bit and a constellation point based on the first identifier, and modulate the first identifier according to the mapping rule to obtain a plurality of modulation symbols, wherein
the transceiver unit is further configured to send a first downlink message to the terminal device, wherein the first downlink message comprises the plurality of modulation symbols.

27. The apparatus according to claim 26, wherein the processing unit is specifically configured to determine a control bit based on the first identifier, and determine the mapping rule based on correspondences between different control bits and different mapping rules.

28. The apparatus according to claim 27, wherein the processing unit is specifically configured to determine the control bit based on the first identifier and a random number generation algorithm, or determine the control bit based on the first identifier and a hash function.

29. The apparatus according to claim 28, wherein the processing unit is specifically configured to determine the control bit based on a result of performing an exclusive OR operation on a first partial identifier and a second partial identifier and the hash function, wherein the first partial identifier and the second partial identifier are respectively parts of the first identifier.

30. The apparatus according to any one of claims 27 to 29, wherein a modulation scheme of the plurality of modulation symbols comprises binary phase shift keying BPSK, wherein when the control bit is 0, the constellation point is (-1, 0) when the information bit is 0, or the constellation point is (1, 0) when the information bit is 1; or when the control bit is 1, the constellation point is (1, 0) when the information bit is 0, or the constellation point is (-1, 0) when the information bit is 1;

a modulation scheme of the plurality of modulation symbols comprises quadrature phase shift keying QPSK, wherein when the control bit is 00, the constellation point is ($\sqrt{2}$, 0) when the information bit is 00, the constellation point is (0, $\sqrt{2}$) when the information bit is 01, the constellation point is (0, - V2) when the information bit is 10, or the constellation point is ($-\sqrt{2}$, 0) when the information bit is 11; when the control bit is 01, the constellation point is ($-\sqrt{2}$, 0) when the information bit is 00, the constellation point is (0, $-\sqrt{2}$) when the information bit is 01, the constellation point is (0, $\sqrt{2}$) when the information bit is 10, or the constellation point is ($\sqrt{2}$, 0) when the information bit is 11; when the control bit is 10, the constellation point is (1, 1) when the information bit is 00, the constellation point is (-1, 1) when the information bit is 01, the constellation point is (1, -1) when the information bit is 10, or the constellation point is (-1, -1) when the information bit is 11; or when the control bit is 11, the constellation point is (-1, -1) when the information bit is 00, the constellation point is (1, -1) when the information bit is 01, the constellation point is (-1, 1) when the information bit is 10, or the constellation point is (1, 1) when the information bit is 11; or

a modulation scheme of the plurality of modulation symbols comprises quadrature phase shift keying QPSK, wherein when the control bit is 00, the constellation point is (1, 1) when the information bit is 00, the constellation point is (-1, 1) when the information bit is 01, the constellation point is (1, -1) when the information bit is 10, or the constellation point is (-1, -1) when the information bit is 11; when the control bit is 01, the constellation point is (-1, 1) when the information bit is 00, the constellation point is (-1, -1) when the information bit is 01, the constellation point is (1, 1) when the information bit is 10, or the constellation point is (1, -1) when the information bit is 11; when the control bit is 10, the constellation point is (-1, -1) when the information bit is 00, the constellation point is (1, -1) when the information bit is 01, the constellation point is (-1, 1) when the information bit is 10, or the constellation point is (1, 1) when the information bit is 11; or when the control bit is 11, the constellation point is (1, -1) when the information bit is 00, the constellation point is (1, 1) when the information bit is 01, the constellation point is (-1, -1) when the information bit is 10, or the constellation point is (-1, 1) when the information bit is 11.

31. The apparatus according to any one of claims 26 to 30, wherein a bit length of the first identifier is equal to a bit length of the control bit.

32. A random access apparatus, wherein the apparatus comprises:

a transceiver unit, configured to receive a first uplink message from a terminal device, wherein the first uplink message comprises a first identifier; and
a processing unit, configured to encrypt known information based on an encryption algorithm and the first identifier to obtain a second identifier, and modulate the second identifier to obtain a plurality of modulation symbols, wherein the known information is defined in a protocol or determined by the network device, wherein the transceiver unit is further configured to send a first downlink message to the terminal device, wherein the first downlink message comprises the plurality of modulation symbols.

33. A communication apparatus, comprising a processor and a memory, wherein

the memory is configured to store instructions; and
the processor is configured to execute the instructions, to enable the method according to any one of claims 1 to 9 to be performed, or the method according to any one of claims 10 to 16 to be performed.

34. The apparatus according to claim 33, wherein the communication apparatus is a chip.

35. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 16 to obtain processed data, and the interface is configured to output the processed data.

36. A computer-readable storage medium, wherein the computer-readable storage medium is configured to store a computer program, and when the computer program is executed, the method according to any one of claims 1 to 16 is performed.

37. A computer program, wherein when the computer program is executed, the method according to any one of claims 1 to 9 is performed, or the method according to any one of claims 10 to 16 is performed.

38. A communication system, comprising a terminal device and a network device, wherein the terminal device is configured to perform the method according to any one of claims 1 to 9, and the network device is configured to perform the method according to any one of claims 10 to 16.

| Terminal device | | Network device |
|---|---|---|

Msg1, including a pilot

Msg2, including a detected pilot ID, a TA, and information about a time-frequency resource of a Msg3

Msg3, including a MAC address

Msg4, including the MAC address in the Msg3

FIG. 1

Terminal device 1

Network device

Terminal device 3

Terminal device 2

Terminal device 4

FIG. 2

FIG. 3

FIG. 4

FIG. 5a

FIG. 5b

FIG. 5c

FIG. 5d

```
0000    0100        1100    1000
 ●       ●           ●       ●
0001    0101        1101    1001
 ●       ●           ●       ●
        ────────────────────────────▶
0011    0111        1111    1011
 ●       ●           ●       ●
0010    0110        1110    1010
 ●       ●           ●       ●
```

FIG. 5e

```
┌──────────────────┐
│       S1         │
│ (bit 0 to bit 23)│
└──────────────────┘        ┌──────┐     ┌──────────┐     ┌────────────┐     ┌─────────────┐
        ⊕          ───────▶ │ S12  │ ──▶ │   Hash   │ ──▶ │ Obtain 24  │ ──▶ │ Control bit │
┌──────────────────┐        │      │     │ function │     │bits through│     │             │
│       S2         │        └──────┘     │ (SHA-3)  │     │ truncation │     └─────────────┘
│(bit 24 to bit 47)│        24 bits      └──────────┘     └────────────┘        24 bits
└──────────────────┘
```

FIG. 5f

```
┌────────┐     ┌───────────────┐     ┌───────────┐     ┌─────────────┐
│  Msg3  │ ──▶ │ Hash function │ ──▶ │ Truncate  │ ──▶ │ Control bit │
│        │     │   (SHA-3)     │     │(optional) │     │             │
└────────┘     └───────────────┘     └───────────┘     └─────────────┘
```

FIG. 5g

UE

Base station

Msg1, including a pilot  601

Msg2, including a detected pilot ID, a TA instruction, and information about a time-frequency resource of a Msg3  602

Msg3, including a first identifier  603

Msg4, including a plurality of modulation symbols  604

FIG. 6

Processing unit  701

Transceiver unit  702

Communication apparatus

FIG. 7

80

810

Transceiver

820

Processor

840

830

Memory

FIG. 8

Chip

Logic circuit 901

Interface 902

FIG. 9

## INTERNATIONAL SEARCH REPORT

International application No.

**PCT/CN2023/081884**

**A.    CLASSIFICATION OF SUBJECT MATTER**

H04W12/122(2021.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, ENTXTC, CNABS, DWPI, IEEE, 3GPP: 标识, 调制, 符号, 恶意, 解调, 随机接入, 隐蔽, 通信, 星座, 比特, identity, modulat+, symbol, malicious, demodulat+, random access, constellation

**C.    DOCUMENTS CONSIDERED TO BE RELEVANT**

| Category* | Citation of document, with indication, where appropriate, of the relevant passages | Relevant to claim No. |
|---|---|---|
| A | CN 114245471 A (CHENGDU ARRAYCOMM WIRELESS TECHNOLOGIES CO., LTD.) 25 March 2022 (2022-03-25)<br>    description, paragraphs [0052]-[0063], and figure 4A | 1-38 |
| A | CN 114175841 A (HUAWEI TECHNOLOGIES CO., LTD.) 11 March 2022 (2022-03-11)<br>    entire document | 1-38 |
| A | CN 112889339 A (QUALCOMM INC.) 01 June 2021 (2021-06-01)<br>    entire document | 1-38 |
| A | US 2018035470 A1 (ASUSTEK COMPUTER INC.) 01 February 2018 (2018-02-01)<br>    entire document | 1-38 |
| A | US 2019141741 A1 (TELEFONAKTIEBOLAGET LM ERICSSON (PUBL)) 09 May 2019 (2019-05-09)<br>    entire document | 1-38 |

☐ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **17 May 2023** | **24 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 492 842 A1

| | | | |
|---|---|---|---|
| **INTERNATIONAL SEARCH REPORT**<br>Information on patent family members | | International application No.<br>**PCT/CN2023/081884** | |

| Patent document<br>cited in search report | | | Publication date<br>(day/month/year) | Patent family member(s) | | | Publication date<br>(day/month/year) |
|---|---|---|---|---|---|---|---|
| CN | 114245471 | A | 25 March 2022 | None | | | |
| CN | 114175841 | A | 11 March 2022 | WO | 2021035447 | A1 | 04 March 2021 |
| | | | | US | 2022183054 | A1 | 09 June 2022 |
| | | | | EP | 4021136 | A1 | 29 June 2022 |
| CN | 112889339 | A | 01 June 2021 | EP | 3871466 | A1 | 01 September 2021 |
| | | | | US | 2022030634 | A1 | 27 January 2022 |
| | | | | US | 11638308 | B2 | 25 April 2023 |
| | | | | US | 2020137803 | A1 | 30 April 2020 |
| | | | | US | 11140720 | B2 | 05 October 2021 |
| | | | | WO | 2020086839 | A1 | 30 April 2020 |
| | | | | TW | 202106095 | A | 01 February 2021 |
| US | 2018035470 | A1 | 01 February 2018 | JP | 2020022205 | A | 06 February 2020 |
| | | | | JP | 6960443 | B2 | 05 November 2021 |
| | | | | US | 2018359785 | A1 | 13 December 2018 |
| | | | | US | 11291052 | B2 | 29 March 2022 |
| | | | | ES | 2923517 | T3 | 28 September 2022 |
| | | | | US | 2022174747 | A1 | 02 June 2022 |
| | | | | EP | 3277042 | A1 | 31 January 2018 |
| | | | | EP | 3277042 | B1 | 25 May 2022 |
| | | | | KR | 20180013808 | A | 07 February 2018 |
| | | | | KR | 101967540 | B1 | 09 April 2019 |
| | | | | TW | 201804855 | A | 01 February 2018 |
| | | | | TWI | 675599 | B | 21 October 2019 |
| | | | | JP | 2018019403 | A | 01 February 2018 |
| | | | | US | 2018035470 | A1 | 01 February 2018 |
| | | | | IN | 201744026864 | A | 02 February 2018 |
| | | | | CN | 107666722 | A | 06 February 2018 |
| US | 2019141741 | A1 | 09 May 2019 | CO | 2019004764 | A2 | 31 July 2019 |
| | | | | EP | 3398277 | A1 | 07 November 2018 |
| | | | | EP | 3398277 | B1 | 09 September 2020 |
| | | | | MX | 2019005381 | A | 12 August 2019 |
| | | | | JP | 2020502887 | A | 23 January 2020 |
| | | | | JP | 6828156 | B2 | 10 February 2021 |
| | | | | HUE | 052792 | T2 | 28 May 2021 |
| | | | | CA | 3043484 | A1 | 17 May 2018 |
| | | | | CA | 3043484 | C | 19 January 2021 |
| | | | | ES | 2830973 | T3 | 07 June 2021 |
| | | | | KR | 20190082886 | A | 10 July 2019 |
| | | | | KR | 102240248 | B1 | 14 April 2021 |
| | | | | US | 11191102 | B2 | 30 November 2021 |
| | | | | US | 2022086900 | A1 | 17 March 2022 |
| | | | | IL | 266457 | A | 30 June 2019 |
| | | | | AR | 110059 | A1 | 20 February 2019 |
| | | | | JP | 2021078135 | A | 20 May 2021 |
| | | | | JP | 7155304 | B2 | 18 October 2022 |
| | | | | WO | 2018087124 | A1 | 17 May 2018 |
| | | | | PL | 3398277 | T3 | 04 May 2021 |
| | | | | DK | 3398277 | T3 | 26 October 2020 |
| | | | | RU | 2729051 | C1 | 04 August 2020 |
| | | | | EP | 3832920 | A1 | 09 June 2021 |

Form PCT/ISA/210 (patent family annex) (July 2022)

**INTERNATIONAL SEARCH REPORT**
Information on patent family members

International application No.

**PCT/CN2023/081884**

| Patent document cited in search report | Publication date (day/month/year) | Patent family member(s) | | | Publication date (day/month/year) |
|---|---|---|---|---|---|
| | | US | 2019141741 | A1 | 09 May 2019 |
| | | CN | 11016897 | A | 23 August 2019 |
| | | HK | 40013424 | A0 | 07 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210326062